# EUROPÄISCHE PATENTSCHRIFT

(11) **EP 3 991 228 B1**
(45) Veröffentlichungstag und Bekanntmachung des Hinweises auf die Patenterteilung: **27.05.2026**
(21) Anmeldenummer: 20733242.0
(22) Anmeldetag: 12.06.2020
(51) Int. Cl.: H01M 8/04014, H01M 8/04089, H01M 8/04119, H01M 8/0438, H01M 8/0444, H01M 8/2475

(54) **BRENNSTOFFZELLENSYSTEM MIT EINER BELÜFTUNGSLEITUNG, VERFAHREN ZUM BELÜFTEN EINES GEHÄUSES EINES BRENNSTOFFZELLENSYTEMS SOWIE KRAFTFAHRZEUG**
FUEL CELL SYSTEM WITH A VENTILATION LINE, METHOD FOR VENTILATING A HOUSING OF A FUEL CELL SYSTEM AND VEHICLE
SYSTÈME DE PILE À COMBUSTIBLE COMPRENANT UNE CONDUITE D'AÉRATION, PROCÉDÉ D'AÉRATION D'UN BOÎTIER D'UN SYSTÈME DE PILE À COMBUSTIBLE AINSI QUE VÉHICULE AUTOMOBILE

(30) Priorität: 26.06.2019 DE 102019209210
(43) Veröffentlichungstag der Anmeldung: 04.05.2022
(73) Patentinhaber: Robert Bosch GmbH, 70442 Stuttgart (DE)
(72) Erfinder: REMLINGER, Markus, 83714 Miesbach (DE); SCHMEISSER, Harald, 70469 Stuttgart (DE); REWERS, Gregory, 71701 Schwieberdingen (DE); BELSCHNER, Werner, 74544 Michelbach an der Bilz (DE); HAMMER, Uwe, 83059 Kolbermoor (DE)
(86) Internationale Anmeldenummer: PCT/EP2020/066266
(87) Internationale Veröffentlichungsnummer: WO 2020/260035

(56) Entgegenhaltungen:
- DE-A1- 102015 014 561
- JP-A- 2013 037 836
- JP-A- 2013 247 051
- US-A1- 2013 089 800

## Beschreibung

### Stand der Technik

In mobilen Anwendungen werden immer häufiger Brennstoffzellensysteme zur Energieversorgung eingesetzt. Ein Brennstoffzellensystem umfasst einen Brennstoffzellenstack, der vorzugsweise aus mehreren Brennstoffzellen gebildet ist und elektrische Energie auf Grundlage einer Reaktion zwischen einem auf Wasserstoff basierenden Brenngas (beispielsweise reinem Wasserstoff) und einem Oxidationsmittelzufuhrgas (beispielsweise reinem Sauerstoff oder sauerstoffhaltiger Luft) erzeugt. Dafür wird einer Anode des Brennstoffzellenstacks Wasserstoff zugeführt, während einer Kathode des Brennstoffzellenstacks Luft zugeführt wird. Die Hauptanwendung des Brennstoffzellensystems ist die Lieferung von elektrischer Energie beispielsweise an ein Bordnetz eines Fahrzeuges, insbesondere eines Kraftfahrzeuges.

Kommt es zu einer Undichtigkeit des Brennstoffzellensystems, wodurch z. B. Wasserstoff in ein Gehäuse, welches den Brennstoffzellenstack umgibt, oder in die Umgebung entweicht, kann beispielsweise bei Austritt von Wasserstoff, ein zündfähiges Gemisch entstehen. Dieses Gemisch kann unter einem Funken zur Verbrennung oder Explosion führen. Dies stellt ein erhebliches Gefahrenpotenzial in technischen Anwendungen dar. Um das Gefahrenpotenzial, das durch Austritt von Wasserstoff aus einem Brennstoffzellensystem auftritt, zu minimieren, werden unterschiedliche Lösungen verwendet.

Die Lösung in der Druckschrift WO 2015/180746 A1 ist ein Brennstoffzellensystem mit einem Brennstoffzellenstapel in einem Gehäuse, wobei das Gehäuse wenigstens eine Belüftungsverbindung zur Umgebung aufweist.

Auch Lüfter, die zur Verbesserung der Wasserstoffbelüftung beitragen, können verwendet werden. In der Druckschrift DE 10 2008 020 762 A1 ist ein Brennstoffzellensystem mit einem Brennstoffzellenstapel in einem Gehäuse gezeigt, wobei im Zuluft- oder Abluftkanal Lüfter angeordnet sind. Auch in der Druckschrift JP 2010-182468 A wird ein Brennstoffzellengehäuse mit einem Brennstoffzellenstapel und einem Lüfter offenbart. Weitere Druckschriften, welche die Belüftung von Brennstoffzellengehäusen offenbaren sind JP2013037836A, US2013/089800A1, JP2013247051A und DE102015014561A1.

### Offenbarung der Erfindung

Die vorliegende Erfindung betrifft ein Brennstoffzellensystem gemäß den Merkmalen des Anspruchs 1, ein Verfahren zum Belüften eines Gehäuses eines Brennstoffzellensystems gemäß den Merkmalen des Anspruchs 10 sowie ein Kraftfahrzeug mit einem Brennstoffzellensystem gemäß Anspruch 11.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Brennstoffzellensystem beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Gemäß einem ersten Aspekt zeigt die vorliegende Erfindung ein Brennstoffzellensystem mit mindestens einer Brennstoffzelle, wobei jede Brennstoffzelle einen Kathodeneingang aufweist, einem Gehäuse, in dem die mindestens eine Brennstoffzelle angeordnet ist, wobei das Gehäuse mindestens einen Belüftungseingang zum Einströmen wenigstens eines Belüftungsfluids und mindestens einen Ausströmausgang zum Ausströmen mindestens eines Ausströmfluids aufweist. Weiter umfasst das Brennstoffzellensystem eine Versorgungsleitung zum mindestens einen Kathodeneingang zur Bereitstellung von einem Versorgungsfluid von einer ersten Fluidquelle zu dem mindestens einen Kathodeneingang, und einen Verdichter in der Versorgungsleitung zum Verdichten des Versorgungsfluids. Ferner umfasst das Brennstoffzellensystem eine fluidkommunizierende Belüftungsleitung zwischen der Versorgungsleitung und dem mindestens einen Belüftungseingang zum Verbinden der Versorgungsleitung mit dem mindestens einen Belüftungseingang, wobei die fluidkommunizierende Belüftungsleitung mit der Versorgungsleitung zwischen dem Verdichter und dem mindestens einen Kathodeneingang verbunden ist, wobei in der Versorgungsleitung zwischen dem Verdichter und dem mindestens einen Kathodeneingang ein Befeuchter angeordnet ist und die fluidkommunizierende Belüftungsleitung mit der Versorgungsleitung, die sich zwischen dem Befeuchter und der mindestens einen Brennstoffzelle befindet, verbunden ist.

Ein erfindungsgemäßes Brennstoffzellensystem weist in einem Gehäuse mindestens eine Brennstoffzelle auf. Das bedeutet, dass auch mehrere einzelne Brennstoffzellen zu einem Brennstoffzellenstack angeordnet sein können und dieses Brennstoffzellenstack in dem Gehäuse angeordnet ist. Ferner können auch mehrere einzelne Brennstoffzellenstacks in einem Gehäuse angeordnet und miteinander verschalten sein. Die mindestens eine Brennstoffzelle umfasst mindestens einen Kathodeneingang und bekannterweise auch mindestens einen Anodeneingang und mindestens einen Kühlmitteleingang. Der mindestens eine Kathodeneingang ist mit einer Versorgungsleitung verbunden und wird über diese Versorgungsleitung mit einem Versorgungsfluid, insbesondere Luft, versorgt. Das Versorgungsfluid entstammt einer ersten Fluidquelle, wobei die erste Fluidquelle für die Kathode beispielsweise Umgebungsluft oder ein Druckspeicher mit Luft sein kann. Es ist anzumerken, dass die erste Fluidquelle nicht vom Gegenstand der Erfindung umfasst wird. In der Versorgungleitung ist ein Verdichter angeordnet, der das Versorgungsfluid, insbesondere Luft, verdichtet. Als ein Verdichter kann auch ein Gebläse, Lüfter oder Ventilator verstanden werden. Folglich tritt durch das Verdichten eine Strömung des Versorgungsfluids in Richtung des mindestens einen Kathodeneingangs der mindestens einen Brennstoffelle auf. Auch der mindestens eine Anodeneingang und der mindestens eine Kühlmitteleingang werden bekannterweise über weitere Versorgungsleitungen mit entsprechenden Versorgungsfluiden, insbesondere einem Brennstoff, wie Wasserstoff, beziehungsweise Kühlmittel, versorgt. Auch diese Versorgungsfluide entstammen entsprechenden Fluidquellen.

Ein erfindungsgemäßes Gehäuse kann elektrisch isolierend ausgeführt sein, um einen Berührungsschutz gegenüber unter Spannung stehenden Teilen sicherzustellen. Weiter kann ein Gehäuse einen mechanischen Schutz und eine Aufnahme für die mindestens eine Brennstoffzelle darstellen. Ferner kann ein besonders fluiddichtes Gehäuse von Vorteil sein. Fluiddicht bedeutet, dass kein Raumfluid ungezielt aus dem Innenraum des Gehäuses in den Außenraum des Gehäuses strömt. Der Innenraum des Gehäuses ist der Raum, der vom Gehäuse umgeben/eingeschlossen wird. Der Außenraum des Gehäuses ist der Raum, der vom Gehäuse nicht umgeben/nicht eingeschlossen wird. Mit Raumfluid ist insbesondere ein Luftgemisch (bspw. Luft mit Wasserstoff) im Gehäuse gemeint, welches die mindestens eine Brennstoffzelle und sonstige Teile, wie Leitungen zum mindestens einen Kathodeneingang der mindestens einen Brennstoffzelle, umgibt. Bei einem fluiddichten Gehäuse kann folglich ein Raumfluid, insbesondere ein Belüftungsfluid, nur über den mindestens einen Ausströmausgang gezielt ausströmen. Fluiddicht bedeutet folglich auch, dass Leitungen, wie Rohre, Schläuche und elektrische Leitungen das Gehäuse so durchdringen, dass das Gehäuse weiterhin fluiddicht ist. Weiter kann ein Gehäuse auch Fluidkupplungen aufweisen, wobei die Fluidkupplungen Leitungen, wie Versorgungsleitungen und Belüftungsleitungen, außerhalb des Gehäuses mit Leitungen innerhalb des Gehäuses miteinander fluidkommunizierend verbinden können. Bevorzugterweise können diese Fluidkupplungen fluiddicht in das Gehäuse integriert sein, d. h. diese Fluidkupplungen ermöglichen weiterhin eine Fluidkommunikation von Leitungen außerhalb des Gehäuses mit Leitungen innerhalb des Gehäuses, sind aber so in das Gehäuse integriert, dass kein Raumfluid ungezielt/ungewollt aus dem einem Innenraum des Gehäuses in den Außenraum des Gehäuses dringen kann. Tritt ungewollt aus einer Brennstoffzelle Wasserstoff in ein Gehäuse aus, so kann ein fluiddichtes Gehäuse ein gezieltes Sammeln von Wasserstoff, in dem Gehäuse ermöglichen. Beispielsweise kann Wasserstoff ungewollt aufgrund von Leckagen oder Undichtigkeiten eines Brennstoffzellenstacks in ein Gehäuse entweichen. Da Wasserstoff leichter als Luft ist, wird sich entwichener Wasserstoff größtenteils an einer Stelle im Gehäuses sammeln, welche am weitesten vom Erdmittelpunkt entfernt ist. Der Wasserstoff kann sich aber auch aufgrund des Austrittsorts an einer anderen Stelle, beispielsweise einem Hohlraum an einem Brennstoffzellenstack, sammeln. Das Sammeln von Wasserstoff an einer Stelle im Gehäuse kann gleichzeitig ein kontrolliertes Ausströmen von Wasserstoff aus dem Gehäuse erlauben. Wird ein Ausströmausgang an einer Stelle des Gehäuses, an dem sich Wasserstoff bevorzugt sammelt, platziert, kann ein rasches und kontrolliertes Ausströmen von Wasserstoff aus dem Gehäuse an eine ungefährliche Stelle ermöglicht werden. Wäre ein Gehäuse nicht fluiddicht ausgeführt, könnte der Wasserstoff ungewollt an verschiedenen Stellen des Gehäuses austreten. Gegebenenfalls sammelt sich dann der Wasserstoff außerhalb des Gehäuses an einer Stelle, insbesondere eines Fahrzeuges, an welcher Funken auftreten können. Diese Funken können den Wasserstoff entzünden. Ergo kann ein geeignet platzierter Ausströmausgang, insbesondere in Kombination mit einem fluiddichten Gehäuse, ermöglichen, dass Wasserstoff aus dem Gehäuse kontrolliert in die Umgebung oder einen Behälter ausströmt.

Ein erfindungsgemäßer Belüftungseingang und ein Ausströmausgang können als Öffnungen, insbesondere als Teile eins Gehäuses verstanden werden, an die Leitungen, Rohre oder Schläuche angeschlossen oder eingeführt werden können. Diese Leitungen, Rohre oder Schläuche können beispielsweise an Fluidkupplungen, welche insbesondere in das Gehäuse integriert sind, angeschlossen werden. Der erfindungsgemäße mindestens eine Belüftungseingang und der mindestens ein Ausströmausgang ermöglichen eine Belüftung eines Gehäuses. An dem mindestens einen Belüftungseingang kann ein Belüftungsfluid, insbesondere Luft, in das Gehäuse einströmen, das Gehäuse durchströmen und am mindestens einen Ausströmausgang strömt das Belüftungsfluid zusammen mit im Gehäuse ausgetretenem Brennstoff, insbesondere Wasserstoff, als Ausströmfluid wieder aus. Kann das Ausströmfluid ohne Gefahr frei in die Umgebung ausströmen, so kann ein Ausströmausgang eines Gehäuses einfach eine Öffnung im Gehäuse darstellen. Vorteilhafterweise umströmt ein Belüftungsfluid beim Durchströmen des Gehäuses auch die mindestens eine Brennstoffzelle. Da beim Betrieb der mindestens einen Brennstoffzelle Wärme entsteht, kann mit Hilfe des durchströmenden Belüftungsfluids explosionsfähiger Wasserstoff und/oder Wärme von der mindestens einen Brennstoffzelle und/oder die mindestens eine Brennstoffzelle-umgebende erwärmte Luft über den mindestens einen Ausströmausgang abgeführt werden. Die untere Explosionsgrenze von Wasserstoff in Luft steigt mit abnehmender Temperatur, d. h., dass ein Wasserstoff-Luft Gemisch umso schwerer explodiert, je geringer die Temperatur des Wasserstoff-Luft Gemisches ist. Das Abführen der Wärme und des Wasserstoffes kann daher einerseits eine Leistungssteigerung der mindestens einen Brennstoffzelle bewirken, kann aber auch andererseits zur Sicherheit des Brennstoffzellensystems beitragen. Ferner kann sich dadurch ein besonders optimaler Betriebspunkt für die mindestens eine Brennstoffzelle einstellen.

Erfindungsgemäß verbindet eine fluidkommunizierende Belüftungsleitung die Versorgungsleitung mit dem mindestens einen Belüftungseingang des Gehäuses. Verständlicherweise können auch mehrere Belüftungsleitungen die Versorgungsleitung mit dem mindestens einen Belüftungseingang verbinden. Vorteilhafterweise stellt das erfindungsgemäße Brennstoffzellensystem das Versorgungsfluid nicht nur dem mindestens einen Kathodeneingang zur Verfügung gestellt, sondern gleichzeitig auch dem mindestens einen Belüftungseingang. Dadurch kann das Versorgungsfluid, das in der Belüftungsleitung auch als Belüftungsfluid bezeichnet werden kann, auch von einer ersten Fluidquelle zu dem mindestens einem Belüftungseingang strömen. Das Versorgungsfluid strömt über den mindestens einen Belüftungseingang in das Gehäuse ein, strömt in dem Gehäuse und strömt als Ausströmfluid über den mindestens einen ersten Belüftungsausgang aus. Beim Durchströmen des Gehäuses kann sich das Versorgungsfluid mit dem Wasserstoff mischen, wobei das Versorgungsfluid/Wasserstoff-Gemisch als Ausströmfluid aus dem mindestens einen ersten Belüftungsausgang austritt. Da Wasserstoff leichter als Luft ist, wird im Gehäuse entwichener Wasserstoff von sich aus nach oben steigen, d. h. sich vom Erdmittelpunkt entfernen. Deshalb ist es besonders vorteilhaft, wenn ein Ausströmausgang des Gehäuses so angeordnet ist, insbesondere oben, dass auch Wasserstoff von sich aus über den mindestens einen ersten Belüftungsausgang aus dem Gehäuse ausströmt. Erfindungsgemäß ist die fluidkommunizierende Belüftungsleitung mit der Versorgungsleitung, die sich zwischen dem Verdichter und der mindestens einen Brennstoffzelle befindet, verbunden. Zur Belüftung des Gehäuses wird folglich auf die ohnehin vorhandene Versorgungsleitung mit unter Druck stehendem Versorgungsfluid zurückgegriffen.

Der Verdichter in der Versorgungsleitung kann auch ein Verdichter, insbesondere ein Turboverdichter, mit einer Verdichterkühlleitung sein. Diese Verdichterkühlleitung dient dem Kühlen des Verdichters, indem ein Kühlfluid, insbesondere Luft, unter Druck durch die Verdichterkühlleitung strömt und Wärme des Verdichters abtransportiert. Das Kühlfluid kann von einer zweiten Fluidquelle bereitgestellt werden, wobei die zweite Fluidquelle die Umgebungsluft oder Druckspeicher mit Luft sein kann. Die erste Fluidquelle und die zweite Fluidquelle können auch ein und dieselbe Fluidquelle, insbesondere die Umgebungsluft, sein. Durch die fluidkommunizierende Verdichterbelüftungsleitung zwischen der Verdichterkühlleitung und dem mindestens einen Belüftungseingang kann nun vorteilhafterweise das Kühlfluid von der zweiten Fluidquelle zu dem mindestens einem Belüftungseingang strömen. Das Kühlfluid in der Verdichterbelüftungsleitung kann auch als Belüftungsfluid bezeichnet werden. Verständlicherweise können auch mehrere Verdichterbelüftungsleitungen mehrere Verdichterkühlleitungen mit mindestens einem Belüftungseingang verbinden. Das Kühlfluid strömt über den mindestens einen Belüftungseingang in das Gehäuse ein, strömt in dem Gehäuse und strömt als Ausströmfluid über den mindestens einen ersten Belüftungsausgang aus. Beim Durchströmen des Gehäuses kann sich das Kühlfluid mit dem Wasserstoff mischen, wobei das Kühlfluid/Wasserstoff-Gemisch als Ausströmfluid aus dem mindestens einen ersten Belüftungsausgang austritt. Zur Belüftung des Gehäuses wird folglich auf das vorhandene unter Druck stehende Kühlfluid zurückgegriffen werden. Weiter hat ein unter Druck stehendes Fluid, wie das Versorgungsfluid und/oder Kühlfluid, für eine Belüftung eines Gehäuses den Vorteil, dass ungewollt ausgetretener Wasserstoff besonders schnell, effizient und sicher aus einem Gehäuse abtransportiert wird. Durch die Verwendung des Kühlfluids und/oder des Versorgungsfluids als Belüftungsfluid erfolgt somit auf kostengünstige und einfache Weise eine Belüftung eines Gehäuses. Ferner kann die Sicherheit des Brennstoffzellensystems verbessert werden.

Es kann von Vorteil sein, wenn in der Versorgungsleitung eines erfindungsgemäßen Brennstoffzellensystems zwischen dem Verdichter und dem mindestens einen Kathodeneingang der mindestens einen Brennstoffzelle ein Wärmeübertrager, insbesondere ein Ladeluftkühler, angeordnet ist und die fluidkommunizierende Belüftungsleitung mit der Versorgungsleitung, die sich zwischen dem Wärmeübertrager und der mindestens einen Brennstoffzelle befindet, verbunden ist. Das Versorgungsfluid strömt in den Wärmeübertrager ein und wird durch den Wärmeübertrager temperiert und das Versorgungsfluid strömt als temperiertes Versorgungsfluid wieder aus dem Wärmeübertrager aus. Da die fluidkommunizierende Verbindungsleitung die Versorgungsleitung mit dem mindestens einen Belüftungseingang verbindet, strömt das temperierte Versorgungsfluid auch als temperiertes Versorgungsfluid (Belüftungsfluid) in das Gehäuse ein. Das temperierte Belüftungsfluid kann besonders vorteilhaft das Gehäuse durchströmen und aus dem mindestens einem Ausströmausgang wieder ausströmen. Insbesondere kann ein Wärmeübertrager gesteuert oder geregelt werden, sodass sich durch das temperierte Versorgungsfluid ein optimaler Betriebspunkt für die mindestens eine Brennstoffzelle einstellt.

In vorteilhafter Weise kann eine Verdichterkühlleitung zur Kühlung des Verdichters und eine fluidkommunizierende Verdichterbelüftungsleitung zwischen der Verdichterkühlleitung und dem mindestens einen Belüftungseingang zum Verbinden der Verdichterkühlleitung mit dem mindestens einen Belüftungseingang vorhanden sein. Ein Ende der Verdichterkühlleitung ist dabei vorteilhafterweise mit einer zweiten Fluidquelle, welche ein Kühlfluid bereitstellt, verbunden. Das andere Ende der Verdichterkühlleitung kann mit einem Ende der Verdichterbelüftungsleitung verbunden sein und kann der Verdichterbelüftungsleitung das Kühlfluid der zweiten Fluidquelle bereitstellen. Das andere Ende der Verdichterbelüftungsleitung ist vorteilhafterweise mit mindestens einem Belüftungseingang verbunden.

Bei einem erfindungsgemäßen Brennstoffzellensystem ist in der Versorgungsleitung zwischen dem Verdichter und dem mindestens einen Kathodeneingang der mindestens einen Brennstoffzelle ein Befeuchter angeordnet und die fluidkommunizierende Belüftungsleitung ist mit der Versorgungsleitung, die sich zwischen dem Befeuchter und der mindestens einen Brennstoffzelle befindet, verbunden. Das Versorgungsfluid strömt in den Befeuchter ein und wird durch den Befeuchter befeuchtet und das Versorgungsfluid strömt als befeuchtetes Versorgungsfluid wieder aus dem Befeuchter aus. Die fluidkommunizierende Verbindungsleitung verbindet die Versorgungsleitung mit dem mindestens einen Belüftungseingang, wodurch das befeuchtete Versorgungsfluid als befeuchtetes Versorgungsfluid (Belüftungsfluid) in das Gehäuse einströmt, in dem Gehäuse strömt und als Ausströmfluid über den mindestens einen ersten Belüftungsausgang ausströmt. Das Wasser im befeuchteten Belüftungsfluid kann zusätzlich zur Kühlung der mindestens einen Brennstoffzelle beitragen. Dies kann eine Leistungssteigerung der mindestens einen Brennstoffzelle bewirken, kann aber auch zur Sicherheit des Brennstoffzellensystems beitragen. Das Gehäuse des Brennstoffzellensystems, die mindestens eine Brennstoffzelle und sonstige Teile innerhalb des Gehäuses können derart ausgebildet sein, dass diesen die Feuchtigkeit des befeuchteten Belüftungsfluid nicht schadet. Insbesondere kann ein Befeuchter gesteuert oder geregelt werden, sodass sich durch das befeuchtete Versorgungsfluid ein optimaler Betriebspunkt für die mindestens eine Brennstoffzelle einstellt.

Es kann von Vorteil sein, wenn die fluidkommunizierende Belüftungsleitung eines erfindungsgemäßen Brennstoffzellensystems zwischen der Versorgungsleitung und dem mindestens einen Belüftungseingang einen Massenstromsensor aufweist und/oder wenn die fluidkommunizierende Verdichterbelüftungsleitung zwischen der Verdichterkühlleitung und dem mindestens einen Belüftungseingang einen Massenstromsensor aufweist. Ein Massenstromsensor hat den Vorteil, dass die Menge des Durchflusses des Versorgungsfluids durch eine Belüftungsleitung und/oder die Menge des Durchflusses des Kühlfluids durch eine Verdichterbelüftungsleitung erfasst und gegebenenfalls gesteuert oder geregelt werden kann. Vorteilhafterweise kann eine Durchflussmenge eines Versorgungsfluids und/oder eines Kühlfluids auf ein Minimum gesteuert oder geregelt werden, wobei trotzdem immer noch eine ausreichende Belüftung eines Gehäuses erreicht werden kann. Besonders vorteilhaft kann die Menge des Durchflusses des Versorgungsfluids durch eine Belüftungsleitung und/oder die Menge des Durchflusses des Kühlfluids durch eine Verdichterbelüftungsleitung erfasst und gegebenenfalls gesteuert oder geregelt werden, wenn eine Ausströmleitung zwischen dem mindestens einen Ausströmausgang und einem Ausströmelement einen Massenstromsensor aufweist. Ferner kann mittels eines Massenstromsensors auch überwacht werden, ob eine Strömung des Versorgungsfluids zur Belüftung in das Gehäuse erfolgt und ein sicheres Betreiben des Brennstoffzellensystems möglich ist.

Ferner kann es bei einem erfindungsgemäßes Brennstoffzellensystem vorteilhaft sein, wenn der mindestens eine Belüftungseingang im unteren Drittel, insbesondere an der unteren Stirnseite des unteren Drittels, des Gehäuses und/oder der mindestens eine Ausströmausgang im oberen Drittel, insbesondere an der oberen Stirnseite des oberen Drittels, des Gehäuses angeordnet ist. Das untere Drittel des Gehäuses, insbesondere die untere Stirnseite, ist bei funktionsgemäßem Gebrauch des Brennstoffzellensystems dem Erdmittelpunkt näher, als das obere Drittel des Gehäuses, insbesondere die obere Stirnseite. Ungewollt austretender Wasserstoff steigt aufgrund der geringeren Dichte im Vergleich zur Luft selbständig im Gehäuse nach oben, d. h. entfernt sich vom Erdmittelpunkt. Folglich wird sich Wasserstoff in einem Gehäuse an der sich vom Erdmittelpunkt weitesten entfernten Stelle des Gehäuses sammeln. Bevorzugterweise ist die mindestens eine Brennstoffzelle so im Gehäuse angeordnet, dass sich der ungewollt austretende Wasserstoff im oberen Drittel des Gehäuses ansammeln kann. Der Abtransport des gefährlichen Wasserstoffs kann durch die Anordnung des mindestens einen Ausströmausgangs im oberen Drittel des Gehäuses verbessert werden. Insbesondere die Anordnung mindestens eines Ausströmausgangs an der oberen Stirnseite kann einen besonders vorteilhaften natürlichen Abtransport des Wasserstoffes ermöglichen. Die Anordnung des mindestens einen Belüftungseingangs im unteren Drittel des Gehäuses kann einen Abtransport ungewollt austretenden Wasserstoffs unterstützen. Tritt Wasserstoff im unteren Drittel des Gehäuses aus, kann sich ein im unteren Drittel einströmendes Belüftungsfluid besonders vorteilhaft mit dem Wasserstoff mischen und aus dem Ausströmausgang ausströmen. Von besonderem Vorteil kann sein, wenn der mindestens eine Belüftungseingang im unteren Drittel und der mindestens eine Ausströmausgang im oberen Drittel angeordnet ist. Dadurch kann ein Belüftungsfluid besonders lange Strecken im Gehäuse, viele Stellen des Gehäuses und sich im Gehäuse befindliche weitere Teile, wie beispielsweise Leitungen, von dem mindestens einen Belüftungseingang zum mindestens einen Belüftungsausgang umströmen und sich mit dem Wasserstoff mischen. Die meisten Stellen im Gehäuse, an denen sich Wasserstoff angesammelt hat, und/oder die meisten Stellen der mindestens einen Brennstoffzelle, an denen ungewollt Wasserstoff austritt, können folglich von der Strömung des Belüftungsfluids erfasst werden. Die beim Betrieb der mindestens einen Brennstoffzelle entstehende Wärme, explosionsfähiger Wasserstoff und/oder Wärme von der mindestens einen Brennstoffzelle und/oder die mindestens eine Brennstoffzelle-umgebende erwärmte Luft kann so mit Hilfe des durchströmenden Belüftungsfluids über den mindestens einen Ausströmausgang vorteilhaft abgeführt werden. Somit erfolgt auf kostengünstige und einfache Weise eine Belüftung eines Gehäuses und weiter wird die Sicherheit des Brennstoffzellensystem verbessert.

Es kann von Vorteil sein, wenn bei einem erfindungsgemäßen Brennstoffzellensystem in der fluidkommunizierenden Belüftungsleitung ein Wärmetauscher zum Temperieren des Versorgungsfluids und/oder in der fluidkommunizierenden Verdichterbelüftungsleitung ein Wärmetauscher zum Temperieren des Kühlfluids angeordnet ist. Der Wärmetauscher in der fluidkommunizierenden Belüftungsleitung kann das Versorgungsfluid und/oder der Wärmetauscher in der fluidkommunizierenden Verdichterbelüftungsleitung kann das Kühlfluid temperieren. Das bedeutet auch, dass die mindestens eine Brennstoffzelle mittels dem in dem Gehäuse strömenden Belüftungsfluid temperiert werden kann. Ferner kann sich die Temperatur des Versorgungsfluids, das in den mindestens einen Kathodeneingang einströmt, und die Temperatur des Versorgungsfluids, das als Belüftungsfluid in den mindestens einen Belüftungseingang einströmt, unterscheiden. Dadurch kann ein besonders vorteilhafter Betriebspunkt der mindestens einen Brennstoffzelle erreicht, insbesondere geregelt oder gesteuert, werden. Denkbar wäre auch, dass ein gemeinsamer Wärmetauscher in der fluidkommunizierenden Belüftungsleitung und der fluidkommunizierenden Verdichterbelüftungsleitung angeordnet wird. Günstig ist hierbei, dass die Kosten reduziert werden und weniger Raum zur Unterbringung des Wärmetauschers, insbesondere bei einem Fahrzeug, benötigt wird. Weiter kann ein Wärmetauscher in der Belüftungsleitung und/oder der Verdichterbelüftungsleitung in einer Nähe, insbesondere einer direkten Nähe, des Gehäuses des Brennstoffzellensystems angeordnet sein. Dies hat den Vorteil, dass die Temperatur des Belüftungsfluids und/oder des Kühlfluids nach dem Wärmetauscher bis zu dem mindestens einen Belüftungseingang nahezu konstant bleibt und eine besonders günstige Regelung möglich ist.

Weiter kann bei einem erfindungsgemäßen Brennstoffzellensystem von Vorteil sein, wenn in der fluidkommunizierenden Belüftungsleitung eine Absperreinheit zum Unterbrechen der Fluidkommunikation zwischen der ersten Fluidquelle und dem mindestens einen Belüftungseingang und/oder in der Verdichterbelüftungsleitung eine Absperreinheit zum Unterbrechen der Fluidkommunikation zwischen der zweiten Fluidquelle und dem mindestens einen Belüftungseingang ist. Als Absperreinheit kann beispielsweise ein Hahn oder Ventil, insbesondere ein geregeltes oder gesteuertes Ventil, verstanden werden. Damit kann der Durchfluss des Versorgungsfluides und/oder des Kühlfluides durch den mindestens einen Belüftungseingang gesteuert beziehungsweise geregelt werden. Insbesondere eine Absperreinheit in der Belüftungsleitung ist besonders vorteilhaft. Erfolgt durch das Kühlfluid in der Verdichterbelüftungsleitung bereits eine ausreichende Belüftung eines Gehäuses kann die Absperreinheit in der Belüftungsleitung die Fluidkommunikation unterbrechen und das Versorgungsfluid kann vollständig in den mindestens einen Kathodeneingang strömen. Dadurch kann ein besonders vorteilhafter Betriebspunkt der mindestens einen Brennstoffzelle erreicht, insbesondere geregelt oder gesteuert, werden. Für Wartungsarbeiten im oder am Gehäuse, beispielsweise an der Brennstoffzelle, kann es ferner sinnvoll sein sowohl die Fluidkommunikation in der Belüftungsleitung und in die Fluidkommunikation in der Verdichterbelüftungsleitung zu unterbrechen. Mit Unterbrechen ist gemeint, dass eine Absperreinheit, wie ein Ventil, geschlossen wird. Unterbricht eine Absperreinheit in der Verdichterbelüftungsleitung die Fluidkommunikation zwischen der zweiten Fluidquelle und dem mindestens einen Belüftungseingang ist sicherzustellen, dass das Kühlfluid zwischen der Verdichterkühlleitung und der Absperreinheit ausströmen kann, damit eine Kühlung des Verdichters gegeben ist. Dies kann beispielsweise durch einen Verdichter, der mehrere Verdichterkühlleitungen aufweist, realisiert werden. Ein Teil der Verdichterleitungen kann mittels Verdichterbelüftungsleitungen mit einem Belüftungseingang eines Gehäuses zur Belüftung dessen verbunden werden und ein Teil der Verdichterkühlleitungen kann zur dauerhaften Kühlung des Verdichters verwendet werden.

Ferner kann es bei einem erfindungsgemäßen Brennstoffzellensystem vorteilhaft sein, wenn der Wärmetauscher in der fluidkommunizierenden Belüftungsleitung und/oder die Absperreinheit in der fluidkommunizierenden Belüftungsleitung und/oder der Wärmetauscher in der fluidkommunizierenden Verdichterbelüftungsleitung und/oder die Absperreinheit in der fluidkommunizierenden Verdichterbelüftungsleitung mittels einer Regelung geregelt werden. Die Regelung kann auch den Verdichter, einen Wärmeübertrager und einen Befeuchter in der Versorgungsleitung regeln. Sofern sinnvoll kann die Regelung auch weitere Komponenten des Brennstoffzellensystems regeln und Komponenten, die hier nicht explizit aufgeführt sind. Dadurch kann ein besonders günstiger, sicherer und vorteilhafter Betrieb der Brennstoffzelle ermöglicht werden. Mit einer Regelung kann auch eine Steuerung gemeint sein. Eine Regelung kann Wärmetauscher derart regeln, dass das in das Gehäuse einströmende wenigstens eine Belüftungsfluid die Temperatur der mindestens einen Brennstoffzelle im Gehäuse regelt. Die Regelung kann auch eine zeitweise Belüftung des Gehäuses des Brennstoffzellensystem ermöglichen, indem die Regelung den Durchfluss der Fluide durch die Absperreinheiten regelt. Die Regelung kann auch eine dauerhafte Belüftung ermöglichen. In dem Gehäuse des Brennstoffzellensystem kann weiter ein Wasserstoffkonzentrationssensor angeordnet sein, wobei die Regelung in Abhängigkeit der gemessenen Wasserstoffkonzentration eine Belüftung und/oder Temperierung, insbesondere über die Absperrelemente in der Belüftungsleitung und/oder der Verdichterbelüftungsleitung, des Gehäuses regelt.

Es kann bei einem erfindungsgemäßen Brennstoffzellensystem von Vorteil sein, wenn das Brennstoffzellensystem eine fluidkommunizierende Ausströmleitung zwischen dem mindestens einen Ausströmausgang und einem Ausströmelement zum Verbinden des mindestens einen Ausströmausgang mit dem Ausströmelement umfasst. Als Ausströmleitung kann beispielsweise eine Leitung, Rohr oder Schlauch verstanden werden. Die Ausströmleitung kann ein kontrolliertes und gezieltes Abführen des Ausströmfluids ermöglichen. Dies kann notwendig sein, damit der sich in dem Ausströmfluid befindliche Wasserstoff an eine ungefährliche Stelle, insbesondere ins Freie (Umgebung), geleitet werden kann. Die Ausströmleitung kann den mindestens einen Ausströmausgang auch mit einem Behälter als Ausströmelement verbinden. Dieser Behälter kann zum Sammeln des Wasserstoffs des Ausströmfluids dienen. Die Ausströmleitung kann auch den mindestens einen Ausströmausgang mit einem Auspuff eines Fahrzeuges verbinden.

Gemäß einem zweiten Aspekt zeigt die vorliegende Erfindung ein Verfahren zum Belüften eines Gehäuses eines erfindungsgemäßen Brennstoffzellensytems wobei das Verfahren die Schritte
- Bereitstellen eines Versorgungsfluids
- Verdichten des Versorgungsfluids durch den Verdichter
- Strömen des Versorgungsfluids in der Versorgungsleitung
- Strömen zumindest eines Teils des Versorgungsfluids als Belüftungsfluid in der fluidkommunizierenden Belüftungsleitung
- Einströmen des Belüftungsfluids in den mindestens einen Belüftungseingang des Gehäuses
- Strömen des Belüftungsfluids durch das Gehäuse und gleichzeitiges Mischen des Belüftungsfluides mit Wasserstoff zu einem Ausströmfluid, und
- Ausströmen des Ausströmfluids aus dem mindestens einen Ausströmausgang des Gehäuses
   umfasst
   und/oder das Verfahren die Schritte
- Bereitstellen eines Kühlfluids
- Verdichten des Kühlfluids
- Strömen des Kühlfluids in der Verdichterkühlleitung zum Kühlen des Verdichters
- Strömen zumindest eines Teils des Kühlfluids als Belüftungsfluid in der fluidkommunizierenden Verdichterbelüftungsleitung
- Einströmen des Belüftungsfluids in den mindestens einen Belüftungseingang des Gehäuses
- Strömen des Belüftungsfluids durch das Gehäuse und gleichzeitiges Mischen des Belüftungsfluides mit Wasserstoff zu einem Ausströmfluid, und
- Ausströmen des Ausströmfluids aus dem mindestens einen Ausströmausgang des Gehäuses
umfasst.

Durch ein erfindungsgemäßes Verfahren kann auf einfache und günstige Weise ein Gehäuse eines Brennstoffzellensystems belüftet werden und ferner kann die Sicherheit des Brennstoffzellensystems verbessert werden. Die Belüftung des Gehäuses kann durch ein Versorgungsfluid und/oder ein Kühlfluid erfolgen.

Bei der Belüftung des Gehäuses durch ein Versorgungsfluid wird in einem ersten Schritt das Versorgungsfluid bereitgestellt. Dieses Versorgungsfluid kann von einer ersten Fluidquelle, welche insbesondere die Umgebungsluft ist, bereitgestellt werden. Das Versorgungsfluid strömt, ausgehend von der ersten Fluidquelle, in der Versorgungsleitung in Richtung Brennstoffzelle. Eine fluidkommunizierende Belüftungsleitung zwischen der Versorgungsleitung und mindestens einem Belüftungseingang eines Gehäuses ermöglicht, dass zumindest ein Teil des Versorgungsfluids als Belüftungsfluid in der fluidkommunizierenden Belüftungsleitung strömen kann. Dieses Belüftungsfluid strömt in den mindestens einen Belüftungseingang des Gehäuses ein, strömt durch das Gehäuse und mischt sich mit Wasserstoff zu einem Ausströmfluid und strömt als Ausströmfluid aus dem mindestens einen Ausströmausgang des Gehäuses aus.

Bei der Belüftung des Gehäuses durch ein Kühlfluid wird in einem ersten Schritt das Kühlfluid bereitgestellt. Dieses Kühlfluid kann von einer zweiten Fluidquelle, welche insbesondere die Umgebungsluft ist, bereitgestellt werden. Die zweite Fluidquelle und die erste Fluidquelle können dieselbe Fluidquelle sein. Das Kühlfluid strömt, ausgehend von der zweiten Fluidquelle, in der Verdichterkühlleitung durch den Verdichter und kühlt den Verdichter. Eine fluidkommunizierende Verdichterbelüftungsleitung zwischen der Verdichterkühlleitung und mindestens einem Belüftungseingang eines Gehäuses ermöglicht, dass zumindest ein Teil des Kühlfluids als Belüftungsfluid in der fluidkommunizierenden Verdichterbelüftungsleitung strömen kann. Dieses Belüftungsfluid strömt in den mindestens einen Belüftungseingang des Gehäuses ein, strömt durch das Gehäuse und mischt sich mit Wasserstoff zu einem Ausströmfluid und strömt als Ausströmfluid aus dem mindestens einen Ausströmausgang des Gehäuses aus.

Das Verfahren gemäß dem zweiten Aspekt der Erfindung weist damit dieselben Vorteile auf, wie sie bereits zu dem Brennstoffzellensystem gemäß dem ersten Aspekt der Erfindung beschrieben worden sind.

Gemäß einem dritten Aspekt zeigt die vorliegende Erfindung ein Kraftfahrzeug mit einem erfindungsgemäßen Brennstoffzellensystem. Das Kraftfahrzeug gemäß dem dritten Aspekt der Erfindung weist damit dieselben Vorteile auf, wie sie bereits zu dem Brennstoffzellensystem gemäß dem ersten Aspekt der Erfindung bzw. dem Verfahren gemäß dem zweiten Aspekt der Erfindung beschrieben worden sind.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumliche Anordnungen und Verfahrensschritte, können sowohl für sich als auch in den verschiedenen Kombinationen erfindungswesentlich sein. Dabei ist zu beachten, dass die Figuren nur beschreibenden Charakter haben und nicht dazu gedacht sind, die Erfindung in irgendeiner Form einzuschränken.

Es zeigen jeweils schematisch:
- Fig. 1: ein Brennstoffzellensystem aufweisend eine Belüftungsleitung,
- Fig. 2: ein Brennstoffzellensystem aufweisend eine Verdichterbelüftungsleitung,
- Fig. 3: ein Brennstoffzellensystem aufweisend eine Belüftungsleitung und eine Verdichterbelüftungsleitung,
- Fig. 4: ein Brennstoffzellensystem aufweisend eine Belüftungsleitung und einen Wärmeübertrager,
- Fig. 5: ein Brennstoffzellensystem aufweisend eine Belüftungsleitung und einen Befeuchter,
- Fig. 6: ein Brennstoffzellensystem aufweisend eine Belüftungsleitung, einen Wärmeübertrager und einen Befeuchter,
- Fig. 7: ein Brennstoffzellensystem aufweisend eine Belüftungsleitung, einen Wärmeübertrager und einen Befeuchter,
- Fig. 8: ein Brennstoffzellensystem aufweisend eine Belüftungsleitung, einen Verdichterbelüftungsleitung und Massenstromsensoren,
- Fig. 9: ein Brennstoffzellensystem aufweisend eine Belüftungsleitung, eine Bypass-Leitung, ein Bypass-Ventil und einen Massenstromsensor,
- Fig. 10: ein Brennstoffzellensystem aufweisend eine Belüftungsleitung, eine Verdichterbelüftungsleitung und Wärmetauscher,
- Fig. 11: ein Brennstoffzellensystem aufweisend eine Belüftungsleitung, eine Verdichterbelüftungsleitung und Absperreinheiten,
- Fig. 12: ein Brennstoffzellensystem aufweisend eine Belüftungsleitung, eine Verdichterbelüftungsleitung, Wärmetauscher, Absperreinheiten und eine Regelung,
- Fig. 13: ein Brennstoffzellensystem aufweisend eine Belüftungsleitung und eine Ausströmleitung,
- Fig. 14: ein Gehäuse eines Brennstoffzellensystems,
- Fig. 15: ein Verfahren zum Belüften eines Gehäuses eines Brennstoffzellensytems,
- Fig. 16: ein Verfahren zum Belüften eines Gehäuses eines Brennstoffzellensytems, und
- Fig. 17: ein Kraftfahrzeug mit einem erfindungsgemäßen Brennstoffzellensystem.

In den nachfolgenden Figuren werden für die gleichen technischen Merkmale auch von unterschiedlichen Ausführungsbeispielen identische Bezugszeichen verwendet.

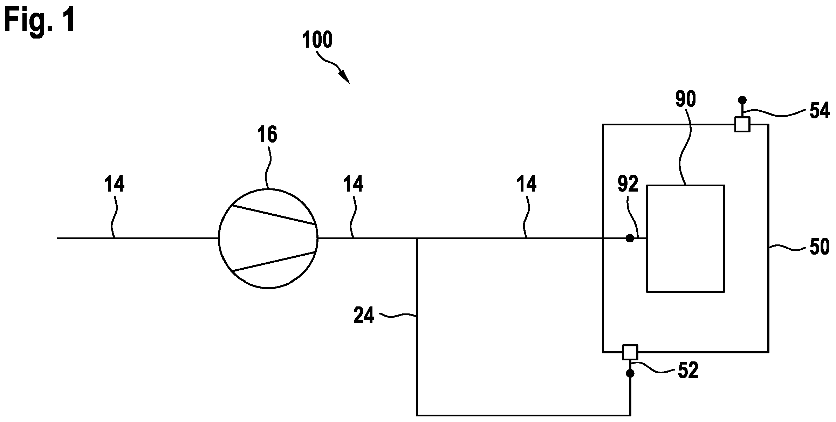

Fig. 1 bis 13 zeigen erfindungsgemäße und nicht erfindungsgemäße Brennstoffzellensysteme 100 mit einem Verdichter 6 und einer Versorgungsleitung 14 zum Versorgen der mindestens einen Brennstoffzelle 90 mit einem Versorgungsfluid, insbesondere Luft. Die Versorgungsleitung 14, die nicht zwischen dem Verdichter 16 und der mindestens einen Brennstoffzelle 100 angeordnet ist, kann mit einer ersten Fluidquelle, insbesondere der Umgebungsluft, verbunden sein. Diese erste Fluidquelle und eine zweite Fluidquelle sind in den Fig. 1 bis 11 nicht dargestellt und sind auch nicht vom Gegenstand der Erfindung umfasst. Der Verdichter 16 verdichtet das Versorgungsfluid. Die Versorgungsleitung 14 zwischen dem Verdichter 16 und der mindestens einen Brennstoffzelle 90 ist mit dem mindestens einen Kathodeneingang 92 der mindestens einen Brennstoffzelle 90 verbunden und führt das verdichtete Versorgungsfluid. Die mindestens eine Brennstoffzelle 90 ist in einem Gehäuse 50 angeordnet. Das Gehäuse 50 kann dem Schutz der Brennstoffzelle, aber insbesondere dem Schutz von Lebewesen dienen. Für sämtliche fluidführende Leitungen, elektrische Leitungen usw. weist das Gehäuse 50 Öffnungen auf. Weiter weist das Gehäuse 50 mindestens einen Belüftungseingang 52 und mindestens einen Ausströmausgang 54 auf. An diesen mindestens einen Belüftungseingang 52 können Leitungen zum Belüften des Innenraums des Gehäuses 50 mit Belüftungsfluiden angeschlossen werden. Vorteilhafterweise durchströmt ein Belüftungsfluid den Innenraum des Gehäuses 50 und strömt aus dem mindestens einen Ausströmausgang 54 wieder aus. Erfindungsgemäß ist das mindestens eine Belüftungsfluid ein unter Druck stehendes für den Betrieb des Brennstoffzellensystems notwendiges Fluid. Dieses notwendige Fluid kann ein durch den Verdichter 16 verdichtete Versorgungsfluid und/oder ein verdichtetes Kühlfluid, welches zur Kühlung des Verdichters 16 benötigt wird, sein. Durch erfindungsgemäße fluidkommunizierende Belüftungsleitungen 24 und/oder fluidkommunizierende Verdichterbelüftungsleitungen 34 erfolgt eine Durchströmung eines Gehäuses 50 mit einem Belüftungsfluid. Durch das Verwenden der für den Betrieb des Brennstoffzellensystems notwendigen unter Druck stehenden Fluide kann auf einfache und kostengünstige Weise eine Belüftung eines Gehäuses 50 geschehen. Weiter hat ein unter Druck stehendes Fluid für eine Belüftung eines Gehäuses den Vorteil, dass ungewollt ausgetretener Wasserstoff besonders schnell, effizient und sicher aus einem Gehäuse abtransportiert wird. Mittels der Belüftung kann vorteilhafterweise vermieden werden, dass sich Wasserstoff in hoher Konzentration im Gehäuse 50 sammelt und zu einer Gefahr wird. Weiter kann eine Temperierung der mindestens einen Brennstoffzelle 90 im Gehäuse 50 durch das Durchströmen eines Belüftungsfluids bewirkt werden. Diese Temperierung kann auch die Leistung des Brennstoffzellensystem 100 beeinflussen, wobei besonders vorteilhaft ist, wenn die mindestens eine Brennstoffzelle 90 auf ihren optimalen Betriebspunkt geregelt wird. Auf in den Fig. 1 bis 11 verschiedene mögliche dargestellten Ausführungsformen wird in den nächsten Absätzen näher eingegangen.

Fig. 1 zeigt ein nicht erfindungsgemäßes Brennstoffzellensystem 100, wobei eine fluidkommunizierende Belüftungsleitung 24 die Versorgungsleitung 14 mit dem mindestens einen Belüftungseingang 52 des Gehäuses 50 verbindet. Durch diese Verbindung kann das unter Druck stehende Versorgungsfluid über die fluidkommunizierende Belüftungsleitung 24 in das Gehäuse 50 zur Belüftung des Gehäuses 50 strömen. Vorteilhaft ist, dass zur Belüftung das unter Druck stehende Versorgungsfluid, welches gleichzeitig zur Versorgung der Kathode der mindestens einen Brennstoffzelle 90 dient, verwendet wird. Ein separater Verdichter oder ein Lüfter für eine Belüftung des Gehäuses 50 entfällt dadurch. In Fig. 1 verläuft die Belüftungsleitung 24 außerhalb des Gehäuses 50 zu dem mindestens einen Belüftungseingang 52. Die Belüftungsleitung 24 könnte hier auch komplett oder teilweise innerhalb des Gehäuses 50 verlaufen.

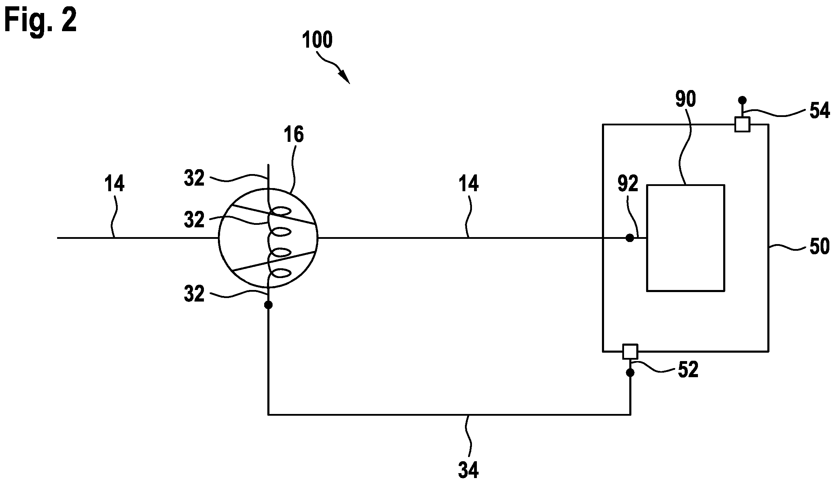

In Fig. 2 ist ein weiteres nicht erfindungsgemäßes Brennstoffzellensystem 100 dargestellt, wobei der Verdichter 16 mittels einer Verdichterkühlleitung 32 zusätzlich gekühlt wird. Eine Verdichterbelüftungsleitung 34 verbindet das eine Ende der Verdichterkühlleitung 32 mit dem mindestens einen Belüftungseingang 52. Das andere Ende der Verdichterkühlleitung 32 kann mit einer zweiten Fluidquelle, insbesondere der Umgebungsluft, verbunden sein. Vorteilhaft hier ist, dass das zur Kühlung des Verdichters 16 verwendete Fluid auch gleichzeitig noch als Belüftungsfluid zur Belüftung des Gehäuses 50 verwendet wird. Das bedeutet, dass auf besonders einfache und kostengünstige Weise eine Belüftung eines Gehäuses 50 stattfindet. Ein zusätzlicher Verdichter oder ein Lüfter zur Belüftung des Gehäuses 50 kann dadurch entfallen.

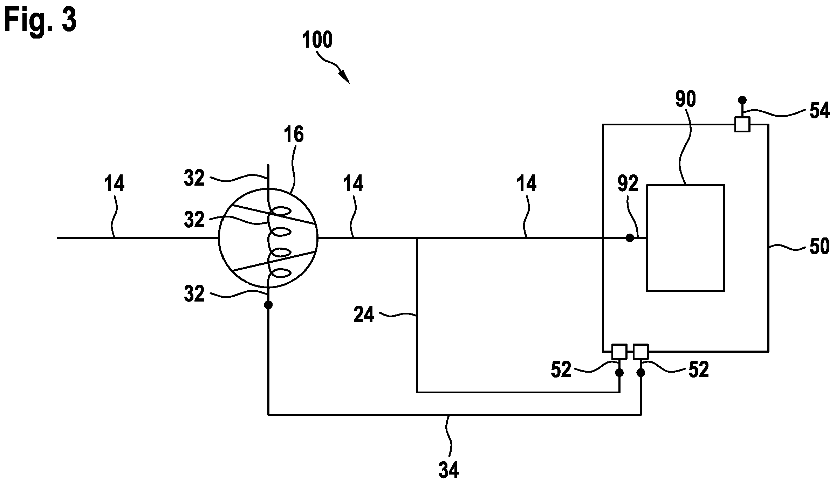

Fig. 3 zeigt eine Kombination aus Fig. 1 und Fig. 2. Dieses nicht erfindungsgemäße Brennstoffzellensystem 100 weist sowohl eine Belüftungsleitung 24, als auch einen Verdichter 16 mit einer Verdichterkühlleitung 32 und einer Verdichterbelüftungsleitung 34 auf. Das bedeutet, dass einerseits das Kühlfluid mittels der Verdichterbelüftungsleitung 34 und andererseits das Versorgungsfluid mittels der Belüftungsleitung 24 über die Belüftungseingänge 52 in das Gehäuse 50 strömen können. Zusammen durchströmen diese das Gehäuse 50 als Belüftungsfluid und treten am Belüftungsausgang 54 wieder aus. Vorteilhaft hier ist, dass der effektive Durchmesser der Belüftungsleitung 24 geringgehalten werden kann, da ein Teil des Belüftungsfluids durch das Kühlfluid bereitgestellt wird. Ein geringer Durchmesser der Belüftungsleitung 24 hat weiter den Vorteil, dass der Druck des Versorgungsfluids am mindestens einen Kathodeneingang 92 der mindestens einen Brennstoffzelle 90 im Wesentlichen dem Ausgangsdruck des Verdichters 16 entspricht. Die Leistung der mindestens einen Brennstoffzelle 90 kann trotz der zusätzlichen Belüftungsleitung 24 hoch gehalten werden.

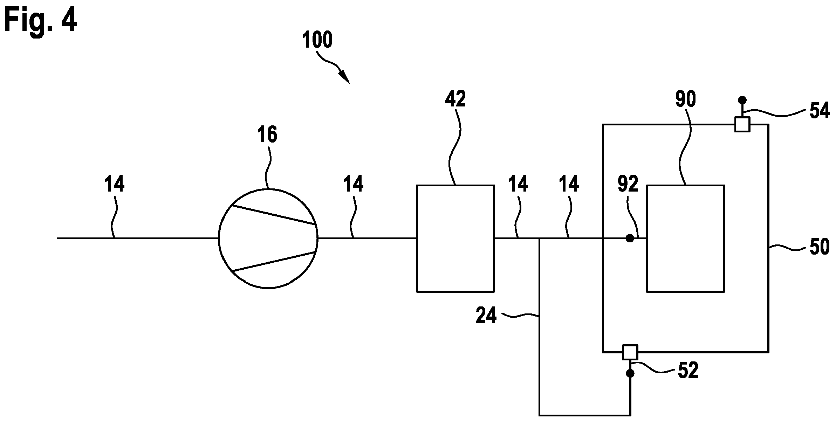

Ein in Fig. 4 illustriertes nicht erfindungsgemäßes Brennstoffzellensystem 100 entspricht Fig. 1, wobei zusätzlich in Fig. 4 ein Wärmeübertrager 42, insbesondere ein Ladeluftkühler (Intercooler), in der Versorgungsleitung 14 angeordnet ist. Der Wärmeübertrager 42 temperiert das Versorgungsfluid auf eine für den Betrieb der mindestens einen Brennstoffzelle 90 passende Temperatur. Gleichzeitig kann erfindungsgemäß das temperierte Versorgungsfluid mittels der Belüftungsleitung 24 über den mindestens einen Belüftungseingang 52 in das Gehäuse 50 als temperiertes Belüftungsfluid strömen, das Gehäuse 50 durchströmen und aus dem Ausströmausgang 54 ausströmen. Vorteilhaft hier ist, dass das temperierte Belüftungsfluid beim Durchströmen des Gehäuses 50 auch die mindestens eine Brennstoffzelle 90 umströmen kann. Da beim Betrieb der mindestens einen Brennstoffzelle 90 Wärme entstehen kann, kann mit Hilfe des durchströmenden Belüftungsfluids explosionsfähiger Wasserstoff, Wärme von der mindestens einen Brennstoffzelle 90 und/oder die Brennstoffzelle-umgebende erwärmte Luft über den Ausströmausgang 54 abgeführt werden. Ebenso wäre ein Erwärmen der mindestens einen Brennstoffzelle 90 durch ein temperiertes Belüftungsfluid möglich. Dies könnte bei der Verwendung des Brennstoffzellensystems 100 in einem Fahrzeug bei kalten Temperaturen, insbesondere beim Starten des Fahrzeuges, notwendig sein.

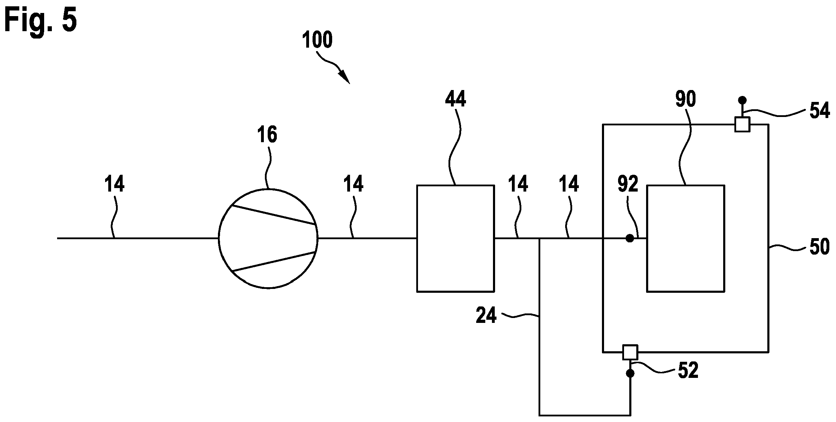

Das in Fig. 5 gezeigte erfindungsgemäße Brennstoffzellensystem 100 entspricht Fig. 1, wobei zusätzlich in Fig. 5 ein Befeuchter 44, insbesondere ein Humidifier, in der Versorgungsleitung 14 angeordnet ist. Das durch den Befeuchter 44 befeuchtete Versorgungsfluid strömt einerseits mittels der Versorgungsleitung 14 in mindestens einen Kathodeneingang 92 der mindestens einen Brennstoffzelle 90 und andererseits mittels der Belüftungsleitung 24 über den mindestens einen Belüftungseingang 52 als befeuchtetes Belüftungsfluid in das Gehäuse 52 ein. Vorteilhafterweise können durch das befeuchtete Belüftungsfluid explosionsfähiger Wasserstoff, Wärme von der mindestens einen Brennstoffzelle 90 und/oder die Brennstoffzelle 90 umgebende erwärmte Luft abgeführt werden. Dies kann eine Leistungssteigerung der mindestens einen Brennstoffzelle 90 bewirken, kann aber auch zur Sicherheit des Brennstoffzellensystems 100 beitragen. Das Wasser im befeuchteten Belüftungsfluid kann zusätzlich zur Kühlung der mindestens einen Brennstoffzelle 90 beitragen. Ferner kann das befeuchtete Belüftungsfluid eine reinigende Funktion erfüllen. Damit ist gemeint, dass Schmutz und Staub im Inneren des Gehäuses 50 mit dem befeuchteten Belüftungsfluid aus dem Ausströmausgang 54 ausströmt. Es ist auch denkbar, dass Schmutz und Staub im gewissen Sinne abgewaschen werden und über einen Schmutzausgang (nicht dargestellt) im Gehäuse 50 nach Außen abgeführt werden. Das Gehäuse 50 des Brennstoffzellensystems 100, die mindestens eine Brennstoffzelle 90 und sonstige Teile innerhalb des Gehäuses 50 können derart ausgebildet sein, dass diesen die Feuchtigkeit des befeuchteten Belüftungsfluid nicht schadet. Insbesondere kann ein Befeuchter 44 das Versorgungsfluid so befeuchten, dass sich ein optimaler Betriebspunkt für die mindestens eine Brennstoffzelle 90 einstellt.

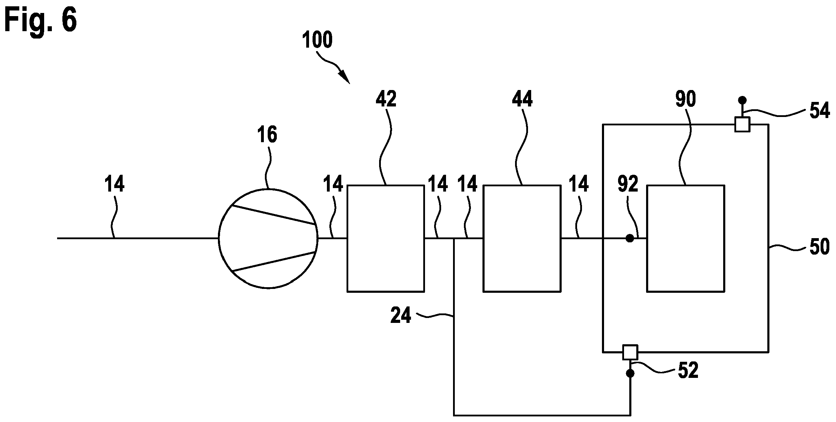

In Fig. 6 ist ein weiteres nicht erfindungsgemäßes Brennstoffzellensystem 100 gemäß Fig. 4 dargestellt, wobei zusätzlich in der Versorgungsleitung 14 ein Befeuchter 44 nach einem Wärmeübertrager 42 und die Belüftungsleitung 24 mit der Versorgungsleitung 14, die sich zwischen dem Wärmeübertrager 42 und dem Befeuchter 44 befindet, verbunden ist. Folglich strömt wie bereits zu Fig. 4 beschrieben ein temperiertes Belüftungsfluid in das Gehäuse 52 ein. Zwecks dem Befeuchter 44 strömt dagegen in den mindestens einen Kathodeneingang ein befeuchtetes und temperiertes Versorgungsfluid ein. Es ergeben sich damit für dieses Brennstoffzellensystem mindestens dieselben Vorteile wie bereits in Fig. 4 erläutert. Ein weiterer Vorteil in dieser Ausführungsform ist, dass das in den mindestens einen Belüftungseingang 52 einströmende temperierte Belüftungsfluid in Kombination mit dem in den mindestens Kathodeneingang 92 und damit in die mindestens eine Brennstoffzelle 90 einströmende befeuchtete und temperierte Versorgungsfluid einen besonders günstigen, effizienten und sicheren Betrieb des Brennstoffzellensystems 100, insbesondere der Brennstoffzelle 90, ermöglicht.

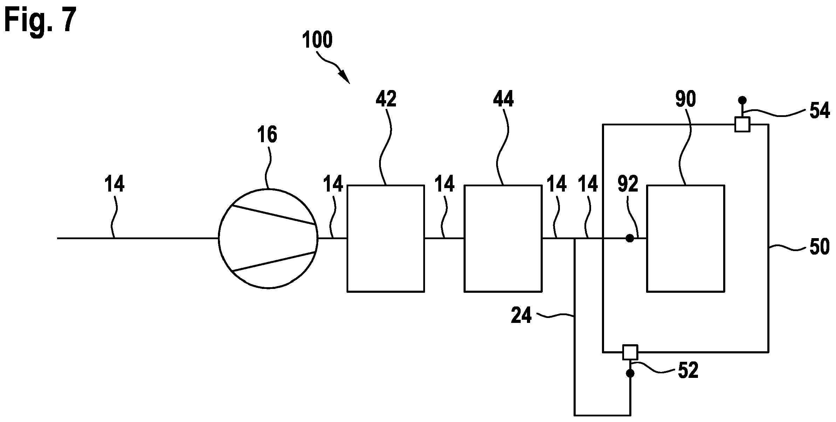

Fig. 7 zeigt ein weiteres erfindungsgemäßes Brennstoffzellensystem 100 entsprechend Fig. 6, wobei die Belüftungsleitung 24 mit der Versorgungsleitung 14, die sich zwischen dem Befeuchter 44 und dem mindestens einen Kathodeneingang 92 befindet, verbunden ist. Ergo strömt wie bereits in Fig. 6 beschrieben ein befeuchtetes und temperiertes Versorgungsfluid in den mindestens einen Kathodeneingang 92 der mindestens einen Brennstoffzelle 90 ein. Dieses befeuchtete und temperierte Versorgungsfluid strömt gleichzeitig auch mittels der Belüftungsleitung 24 über den mindestens einen Belüftungseingang 52 in das Gehäuse 50 ein. Für das Brennstoffzellensystem 100 in dieser Ausführungsform kombinieren sich damit die Vorteile für die Belüftung des Gehäuses 50 mit einem temperierten Belüftungsfluid siehe Beschreibung Fig. 4 und die Vorteile für die Belüftung des Gehäuses 50 mit einem befeuchteten Belüftungsfluid siehe Beschreibung Fig. 5.

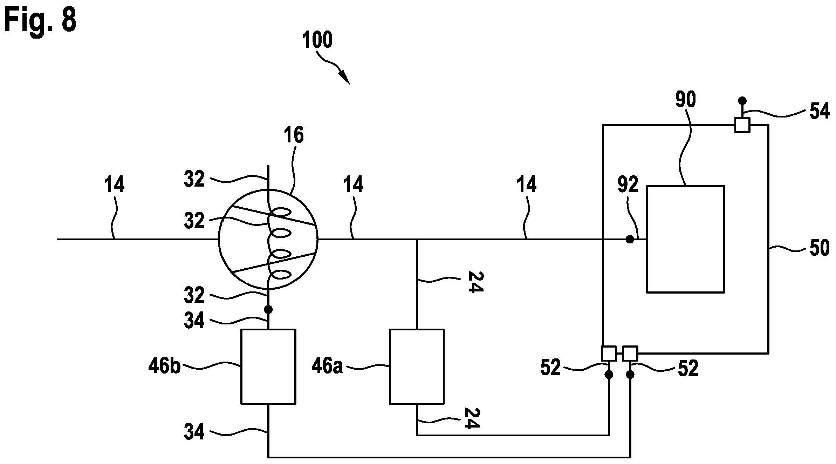

Fig. 8 offenbart ein nicht erfindungsgemäßes Brennstoffzellensystem 100 wie es in Fig. 3 dargestellt ist, wobei zusätzlich in der Belüftungsleitung 24 ein Massenstromsensor 46a und in der Verdichterbelüftungsleitung 34 ein Massenstromsensor 46b angeordnet ist. Ein Massenstromsensor 46a, 46b hat den Vorteil, dass die Menge des Durchflusses des Versorgungsfluids durch eine erfindungsgemäße Belüftungsleitung 24 und die Menge des Durchflusses des Kühlfluids durch eine Verdichterbelüftungsleitung 34 erfasst und somit gesteuert oder geregelt werden kann. Vorteilhafterweise kann eine Durchflussmenge eines Belüftungsfluids, d. h. eines Versorgungsfluids und/oder eines Kühlfluids, auf ein Minimum gesteuert oder geregelt werden, wobei trotzdem immer noch eine ausreichende Belüftung eines Gehäuses 50 erreicht werden kann. Ferner kann mittels eines Massenstromsensors 46a, 46b auch überwacht werden, ob eine Strömung des Versorgungsfluids zur Belüftung in das Gehäuse 50 erfolgt und ein sicheres Betreiben des Brennstoffzellensystems 100 möglich ist.

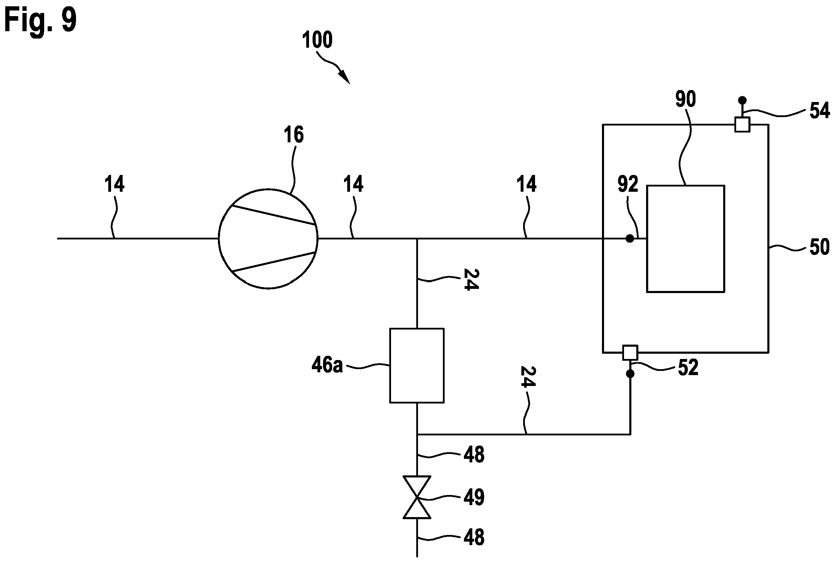

Fig. 9 offenbart ein nicht erfindungsgemäßes Brennstoffzellensystem 100 wie es in Fig. 1 dargestellt ist, wobei zusätzlich in der Belüftungsleitung 24 ein Massenstromsensor 46a angeordnet ist. Es ist denkbar, dass an die Belüftungsleitung 24, wobei die Belüftungsleitung 24 zwischen dem Massenstromsensor 46a und dem mindestens einen Belüftungseingang 52 gemeint ist, ein Ende einer fluidkommunizierenden Bypass-Leitung 48 des Brennstoffzellensystems 100 angeschlossen ist. Diese Bypass-Leitung 48 kann ein Ventil 49, insbesondere ein elektrisch steuerbares Ventil, aufweisen. Das andere Ende der fluidkommunizierenden Bypass-Leitung 48 kann beispielsweise in das Freie (Umgebung) oder in den Auspuff eines Kraftfahrzeuges, das ein erfindungsgemäßes Brennstoffzellensystem 100 aufweist, enden. Durch das Öffnen des Ventils 49 in der Bypass-Leitung 48 kann das Versorgungsfluid aus der Bypass-Leitung ausströmen. Dadurch kann der Druck des Versorgungsfluids in der Versorgungsleitung 14 und der Druck in der Belüftungsleitung 24 reduziert werden.

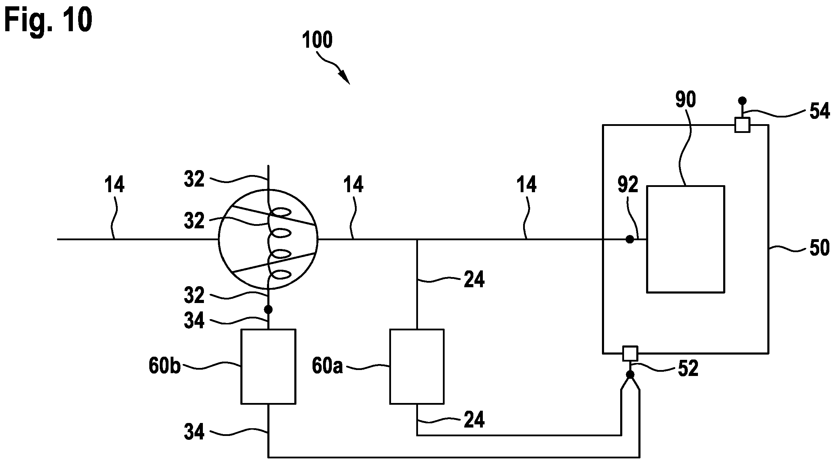

Fig. 10 illustriert ein nicht erfindungsgemäßes Brennstoffzellensystem 100, wobei in der Belüftungsleitung 24 ein Wärmetauscher 60a zum Temperieren des Versorgungsfluids und in der Verdichterbelüftungsleitung 34 ein Wärmetauscher 60b zum Temperieren des Kühlfluids angeordnet ist. Vorteilhafterweise kann dadurch die mindestens eine Brennstoffzelle 90 mittels dem in dem Gehäuse 50 strömenden temperierten Versorgungsfluid und temperierten Kühlfluid temperiert werden. Denkbar wäre auch, dass ein gemeinsamer Wärmetauscher zur Temperierung des Versorgungsfluids und des Kühlfluids verwendet wird. Günstig ist hierbei, dass die Kosten reduziert werden und weniger Raum zur Unterbringung eines Wärmetauschers, insbesondere bei einem Fahrzeug, benötigt wird. Der Wärmetauscher 60a in der Belüftungsleitung 24 hat weiter den Vorteil, dass sich die Temperatur des Versorgungsfluids, das als Belüftungsfluid in das Gehäuse 50 einströmt, von der Temperatur des Versorgungsfluids, das als Versorgungsfluid in den mindestens einen Kathodeneingang 92 einströmt, unterscheiden kann. Das bedeutet, dass einerseits eine optimale Versorgung der mindestens einen Brennstoffzelle 90 mit dem temperierten Versorgungsfluid möglich ist und andererseits eine optimale Belüftung des Gehäuses 50 mit dem temperierten Belüftungsfluid. Dadurch kann sich ein besonders günstiger Betriebspunkt für das Brennstoffzellensystem 100, insbesondere der mindestens einen Brennstoffzelle 90, ergeben.

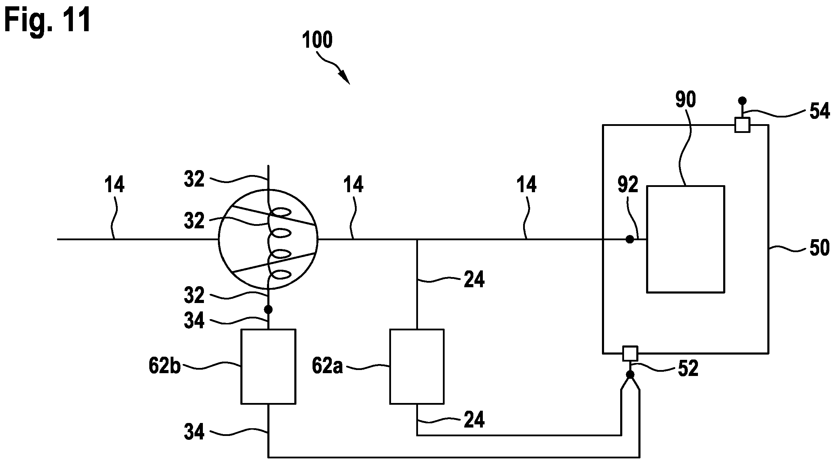

Fig. 11 zeigt ein nicht erfindungsgemäßes Brennstoffzellensystem 100, wobei in der Belüftungsleitung 24 eine Absperreinheit 62a und in der Verdichterbelüftungsleitung 34 eine Absperreinheit 62b angeordnet ist. Die Absperreinheit 62a ermöglicht ein Unterbrechen der Fluidkommunikation zwischen der ersten Fluidquelle (nicht gezeigt) und dem mindestens einen Belüftungseingang 52 und die Absperreinheit 62b ein Unterbrechen der Fluidkommunikation zwischen der zweiten Fluidquelle (nicht gezeigt) und dem mindestens einen Belüftungseingang 52. Eine Absperreinheit 62a, 62b kann beispielsweise ein Hahn oder Ventil, insbesondere ein geregeltes oder gesteuertes Ventil, sein. Vorteilhafterweise kann damit der Durchfluss des Versorgungsfluides und/oder des Kühlfluides durch den mindestens einen Belüftungseingang 52 gesteuert beziehungsweise geregelt werden. Denkbar ist auch, dass nur eine Absperreinheit 62a in der Belüftungsleitung 24 angeordnet ist. Dadurch kann einerseits eine dauerhafte Belüftung des Gehäuses 50 mittels der Verdichterbelüftungsleitung 34 erreicht werden. Andererseits kann bei Bedarf die Belüftung des Gehäuses 50 verstärkt werden, indem die Absperreinheit 62a in der Belüftungsleitung 24 zumindest teilweise "geöffnet" ist und zusätzlich das Versorgungsfluid als Belüftungsfluid durch das Gehäuse 50 strömt. Bedarf könnte beispielsweise dann bestehen, wenn aufgrund eines technischen Defekts große Mengen an Wasserstoff im Gehäuse 50 austreten und zur Verbesserung der Sicherheit des Brennstoffzellensystem 100 ein erhöhter Abtransport von Wasserstoff notwendig wird.

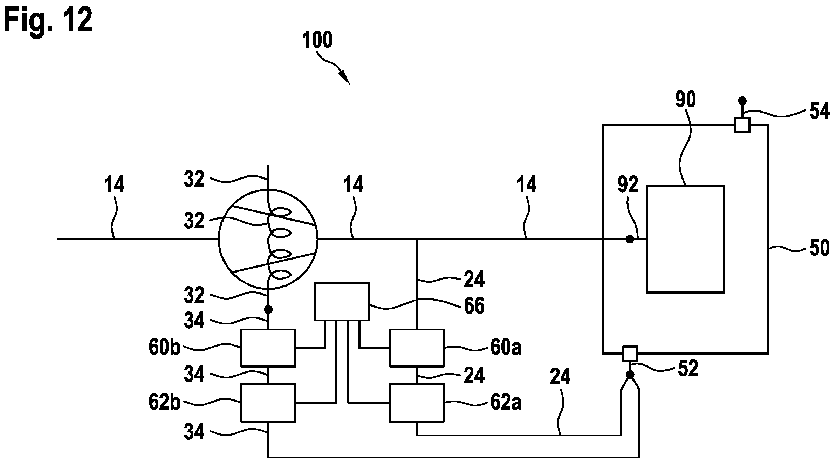

Fig. 12 illustriert ein nicht erfindungsgemäßes Brennstoffzellensystem 100, wobei wie in Fig. 10 in der Belüftungsleitung 24 ein Wärmetauscher 60a und in der Verdichterbelüftungsleitung 34 ein Wärmetauscher 60b und wie in Fig. 11 in der Belüftungsleitung 24 eine Absperreinheit 62a und in der Verdichterbelüftungsleitung 34 ein Wärmetauscher 62b angeordnet ist. Zusätzlich ist in Fig. 12 eine Regelung 66 Teil des erfindungsgemäßen Brennstoffzellensystems 100. Die Regelung 66 kann die Wärmetauscher 60a, 60b und/oder die Absperreinheiten 62a, 62b derart regeln, dass das in das Gehäuse 50 einströmende temperierte und/oder gedrosselte wenigstens eine Belüftungsfluid einen besonders günstigen, sicheren und vorteilhaften Betrieb der Brennstoffzelle 90 ermöglicht. Das kann bedeuten, dass durch ein temperiertes und/oder gedrosseltes Belüftungsfluid die Temperatur und Leistung der Brennstoffzelle 90 geregelt werden kann. Die Regelung 66 kann ferner das Brennstoffzellensystem 100 derart regeln, dass eine dauerhafte Belüftung des Gehäuses 50 über die Verdichterbelüftungsleitung 34 erfolgt und nur bei Bedarf das Gehäuse 50 zusätzlich über die Belüftungsleitung 24 belüftet wird. Dadurch kann das Versorgungsfluid vollständig dem mindestens einen Kathodeneingang 92 zur Verfügung gestellt werden. Die Regelung 66 kann ferner einen Wasserstoffkonzentrationssensor (nicht gezeigt) in dem Gehäuse 52 umfassen, wobei die Regelung 66 in Abhängigkeit der gemessenen Wasserstoffkonzentration eine Belüftung des Gehäuses 50 regelt.

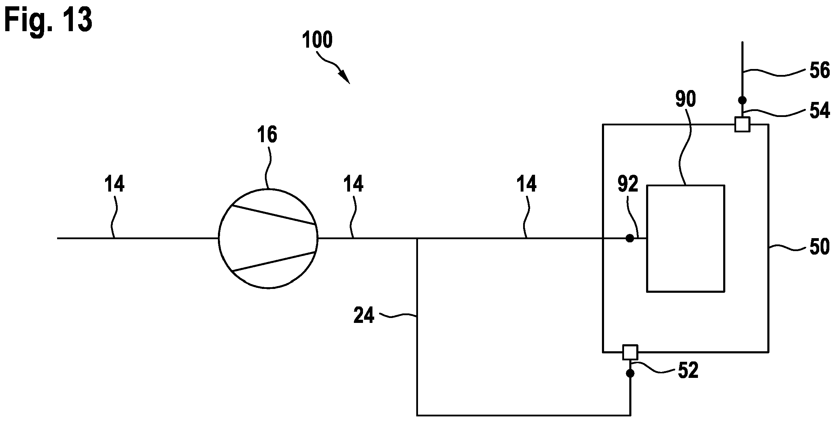

In Fig. 13 ist ein nicht erfindungsgemäßes Brennstoffzellensystem 100 mit einer Ausströmleitung 56 zwischen dem mindestens einen Ausströmausgang 54 und einem Ausströmelement (nicht gezeigt) dargestellt. Als Ausströmleitung 56 kann beispielsweise eine Leitung, Rohr oder Schlauch verstanden werden. Diese Ausströmleitung 56 kann ein kontrolliertes und gezieltes Abführen eines Ausströmfluids ermöglichen. Besonders vorteilhaft ist es, wenn das Gehäuse 50 fluiddicht ausgebildet ist. Fluiddicht bedeutet, dass kein Raumfluid ungezielt aus dem Innenraum des Gehäuses 50 in den Außenraum des Gehäuses 50 strömt.

Der Innenraum des Gehäuses 50 ist der Raum, der vom Gehäuse 50 umgeben/eingeschlossen wird. Der Außenraum des Gehäuses 50 ist der Raum, der vom Gehäuse 50 nicht umgeben/nicht eingeschlossen wird. Mit Raumfluid ist insbesondere ein Luftgemisch (bspw. Luft mit Wasserstoff) im Gehäuse 50 gemeint, welches die mindestens eine Brennstoffzelle 90 und sonstige Teile, wie Leitungen zum mindestens einen Kathodeneingang 92 der mindestens einen Brennstoffzelle 90, umgibt. Bei einem fluiddichten Gehäuse 50 kann folglich ein Raumfluid, insbesondere ein Belüftungsfluid, nur über den mindestens einen Ausströmausgang 54 gezielt ausströmen. Ein erfindungsgemäßes Brennstoffzellensystem 100 mit einem fluiddichten Gehäuse 50 und einer Ausströmleitung 56 kann folglich ermöglichen, dass ein Ausströmfluid mit Wasserstoff an eine ungefährliche Stelle, insbesondere ins Freie, geleitet werden kann. Die Ausströmleitung 56 kann den mindestens einen Ausströmausgang 54 auch mit einem Behälter als Ausströmelement verbinden. Dieser Behälter kann zum Sammeln des Wasserstoffs des Ausströmfluids dienen. Die Ausströmleitung 56 kann auch den mindestens einen Ausströmausgang 54 mit einem Auspuff als Ausströmelement eines Fahrzeuges verbinden.

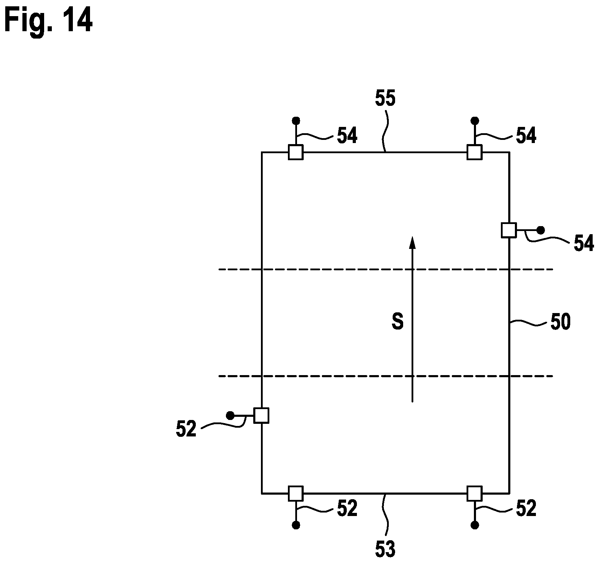

Fig. 14 illustriert ein Gehäuse 50 eines erfindungsgemäßen Brennstoffzellensystems 100, wobei in Fig. 14 aus Übersichtlichkeit nur das Gehäuse 50 mit drei Belüftungseingängen 52 und drei Ausströmausgängen 54 dargestellt ist. In dem Gehäuse 50 kann die erfindungsgemäße mindestens eine Brennstoffzelle 90 (nicht dargestellt) angeordnet sein. Die beiden gepunkteten Linien teilen das Gehäuse 50 in drei Drittel, nämlich in ein unteres Drittel, ein mittleres Drittel und ein oberes Drittel, ein. Im unteren Drittel befinden sich die drei Belüftungseingänge 52, wobei zwei Belüftungseingänge 52 an einer unteren Stirnseite 53 angeordnet sind. Im oberen Drittel befinden sich die drei Ausströmausgänge 54, wobei zwei Ausströmausgänge 52 an einer oberen Stirnseite 55 angeordnet sind. Das untere Drittel, insbesondere die untere Stirnseite 53, ist dem Erdmittelpunkt näher als das obere Drittel, insbesondere die obere Stirnseite 55. Bevorzugterweise ist die mindestens eine Brennstoffzelle 90 so im Gehäuse 50 angeordnet, dass sich der ungewollt austretende Wasserstoff, aufgrund der geringeren Dichte gegenüber Luft, im oberen Drittel des Gehäuses 50 ansammeln kann. Tritt Wasserstoff im unteren Drittel eines Gehäuses 50 aus, kommt es zu einer natürlichen Strömung S des Wasserstoffes vom unteren Drittel des Gehäuses 50 in Richtung des oberen Drittels des Gehäuses 50, da Wasserstoff leichter als Luft ist. Der Abtransport des gefährlichen Wasserstoffs ist durch die Anordnung der drei Ausströmausgänge 54 im oberen Drittel des Gehäuses 50 besonders günstig. Insbesondere die Anordnung der zwei Ausströmausgänge 54 an der oberen Stirnseite 55 des Gehäuses 50 unterstützt einen besonders vorteilhaften natürlichen Abtransport des Wasserstoffes. Ist ein erfindungsgemäßes Brennstoffzellensystem in einem Fahrzeug verbaut, so ist es denkbar, dass mehrere Ausströmausgänge 54 an der oberen Stirnseite 55, insbesondere an den Rändern und/oder der Mitte der oberen Stirnseite 55, angeordnet sind, sodass je nach Fahrzeuglage das Ausströmfluid besonders günstig über einen Ausströmausgang 54 aus dem Gehäuse 50 ausströmen kann. Ferner kann die Anordnung der drei Belüftungseingänge 52 im unteren Drittel des Gehäuses einen Abtransport ungewollt austretenden Wasserstoffs unterstützen. Insbesondere wenn Wasserstoff im unteren Drittel des Gehäuses 50 austritt, kann sich das Belüftungsfluid verbessert mit dem Wasserstoff vermischen und aus einem Ausströmausgang 54 ausströmen. Von besonderem Vorteil kann sein, wenn mindestens ein Belüftungseingang 52 im unteren Drittel und mindestens eine Ausströmausgang 54 im oberen Drittel angeordnet ist. Dadurch kann nämlich ein Belüftungsfluid besonders lange Strecken im Gehäuse 50, viele Stellen des Gehäuses 50 und sich im Gehäuse 50 befindliche weitere Teile, wie beispielsweise Leitungen, von dem mindestens einen Belüftungseingang 52 zum mindestens einen Belüftungsausgang 54 umströmen. Die meisten Stellen im Gehäuse 50, an denen sich Wasserstoff angesammelt hat, und/oder die meisten Stellen der mindestens einen Brennstoffzelle 90, an denen ungewollt Wasserstoff austritt, werden folglich von der Strömung des Belüftungsfluids erfasst. Auch kann mit Hilfe des durchströmenden Belüftungsfluids die beim Betrieb der mindestens einen Brennstoffzelle 90 entstehende Wärme von der mindestens einen Brennstoffzelle 90 und/oder die mindestens eine Brennstoffzelle-umgebende erwärmte Luft über den mindestens einen Ausströmausgang 54 abgeführt werden. Somit erfolgt auf kostengünstige und einfache Weise eine Belüftung eines Gehäuses und weiter wird die Sicherheit des Brennstoffzellensystem verbessert. Eine Anordnung von Belüftungseingängen 52 und Ausströmausgängen 54 im mittleren Bereich des Gehäuses 50 ist jedoch nicht ausgeschlossen. Eine Anordnung der Belüftungseingänge 52 und Ausströmausgänge 54 kann je nach Anordnung eines Gehäuses 50 eines Brennstoffzellensystems 100 an beispielsweise eine Karosserie eines Fahrzeuges angepasst werden.

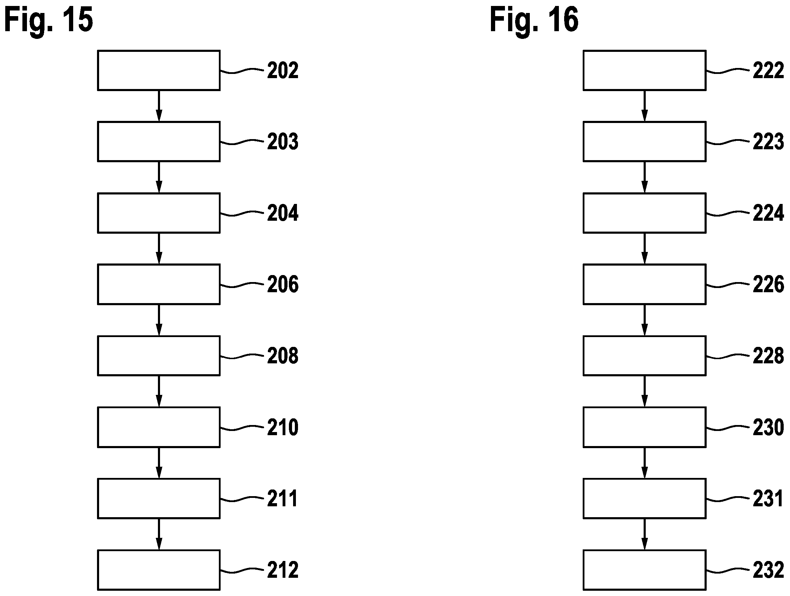

In Fig. 15 ist ein erfindungsgemäßes Verfahren 200 illustriert, wobei für die Belüftung des Gehäuses 50 durch ein Versorgungsfluid in einem ersten Schritt das Versorgungsfluid bereitgestellt wird 202. Dieses Versorgungsfluid kann von einer ersten Fluidquelle, welche insbesondere die Umgebungsluft ist, bereitgestellt werden und durch einen Verdichter 16 verdichtet 203 werden. Das Versorgungsfluid strömt 204, ausgehend von der ersten Fluidquelle, in der Versorgungsleitung 14 in Richtung Brennstoffzelle 90. Eine fluidkommunizierende Belüftungsleitung 24 zwischen der Versorgungsleitung 14 und mindestens einem Belüftungseingang 52 eines Gehäuses 50 ermöglicht, dass zumindest ein Teil des Versorgungsfluids als Belüftungsfluid in der fluidkommunizierenden Belüftungsleitung 24 strömen 206 kann. Dieses Belüftungsfluid strömt 208 in den mindestens einen Belüftungseingang 52 des Gehäuses 50 ein, strömt 210 durch das Gehäuse 50 und mischt 211 sich mit Wasserstoff zu einem Ausströmfluid und strömt 212 als Ausströmfluid aus dem mindestens einen Ausströmausgang 54 des Gehäuses aus 50.

In Fig. 16 ist ein nicht erfindungsgemäßes Verfahren 200 illustriert, wobei für die Belüftung des Gehäuses 50 in einem ersten Schritt das Kühlfluid bereitgestellt 222 wird. Dieses Kühlfluid kann von einer zweiten Fluidquelle, welche insbesondere die Umgebungsluft ist, bereitgestellt werden und durch einen Kühlfluidverdichter (nicht dargestellt) verdichtet 223 werden. Die zweite Fluidquelle und die erste Fluidquelle können dieselbe Fluidquelle sein. Das Kühlfluid strömt 224, ausgehend von der zweiten Fluidquelle, in der Verdichterkühlleitung 32 durch den Verdichter 16 und kühlt den Verdichter 16. Eine fluidkommunizierende Verdichterbelüftungsleitung 34 zwischen der Verdichterkühlleitung 32 und mindestens einem Belüftungseingang 52 eines Gehäuses 50 ermöglicht, dass zumindest ein Teil des Kühlfluids als Belüftungsfluid in der fluidkommunizierenden Verdichterbelüftungsleitung 34 strömen 226 kann. Dieses Belüftungsfluid strömt 228 in den mindestens einen Belüftungseingang 52 des Gehäuses 50 ein, strömt 230 durch das Gehäuse 50 und mischt 231 sich mit Wasserstoff zu einem Ausströmfluid und strömt 232 als Ausströmfluid aus dem mindestens einen Ausströmausgang 54 des Gehäuses 50 aus.

Die Belüftung des Gehäuses 50 durch das Versorgungsfluid und/oder das Kühlfluid erfolgt bevorzugterweise dauerhaft. Ferner ist eine geregelte und/oder gesteuerte Belüftung des Gehäuses 50 durch eine Regelung 66 denkbar.

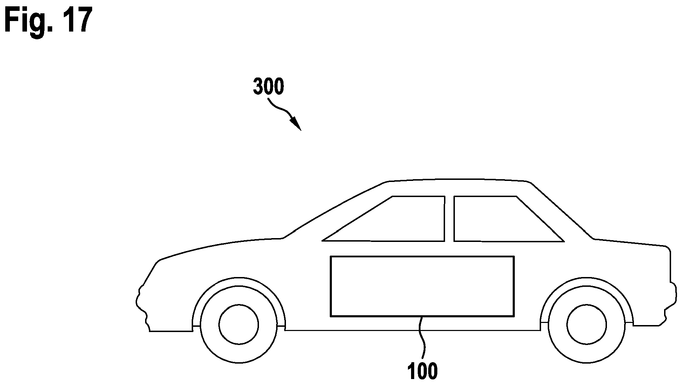

Fig. 17 illustriert ein Kraftfahrzeug 300 mit einem erfindungsgemäßen Brennstoffzellensystem 100.

## Patentansprüche

1. Ein Brennstoffzellensystem (100) mit
g) mindestens einer Brennstoffzelle (90), wobei jede Brennstoffzelle (90) einen Kathodeneingang (92) aufweist,
h) einem Gehäuse (50), in dem die mindestens eine Brennstoffzelle (90) angeordnet ist, wobei das Gehäuse (50) mindestens einen Belüftungseingang (52) zum Einströmen wenigstens eines Belüftungsfluids und mindestens einen Ausströmausgang (54) zum Ausströmen mindestens eines Ausströmfluids aufweist,
i) einer Versorgungsleitung (14) zum mindestens einen Kathodeneingang (92) zur Bereitstellung von einem Versorgungsfluid von einer ersten Fluidquelle zu dem mindestens einen Kathodeneingang (92), und
j) einem Verdichter (16) in der Versorgungsleitung (14) zum Verdichten des Versorgungsfluids,
**dadurch gekennzeichnet, dass**
das Brennstoffzellensystem (100) weiter umfasst:
k) eine fluidkommunizierende Belüftungsleitung (24) zwischen der Versorgungsleitung (14) und dem mindestens einen Belüftungseingang (52) zum Verbinden der Versorgungsleitung (14) mit dem mindestens einen Belüftungseingang (52), wobei die fluidkommunizierende Belüftungsleitung (24) mit der Versorgungsleitung (14) zwischen dem Verdichter (16) und dem mindestens einen Kathodeneingang (92) verbunden ist, wobei in der Versorgungsleitung (14) zwischen dem Verdichter (16) und dem mindestens einen Kathodeneingang (92) ein Befeuchter (44) angeordnet ist und die fluidkommunizierende Belüftungsleitung (24) mit der Versorgungsleitung (14), die sich zwischen dem Befeuchter (44) und der mindestens einen Brennstoffzelle (90) befindet, verbunden ist.

2. Das Brennstoffzellensystem (100) nach Anspruch 1,
**dadurch gekennzeichnet,**
**dass** in der Versorgungsleitung (14) zwischen dem Verdichter (16) und dem mindestens einen Kathodeneingang (92) ein Wärmeübertrager (42), insbesondere ein Ladeluftkühler, angeordnet ist und die fluidkommunizierende Belüftungsleitung (24) mit der Versorgungsleitung (14), die sich zwischen dem Wärmeübertrager (42) und der mindestens einen Brennstoffzelle (90) befindet, verbunden ist.

3. Das Brennstoffzellensystem (100) nach einem der vorangegangenen Ansprüche,
**dadurch gekennzeichnet, dass**
das Brennstoffzellensystem (100) weiter umfasst eine Verdichterkühlleitung (32) zur Kühlung des Verdichters (16) und eine fluidkommunizierende Verdichterbelüftungsleitung (34) zwischen der Verdichterkühlleitung (32) und dem mindestens einen Belüftungseingang (52) zum Verbinden der Verdichterkühlleitung (32) mit dem mindestens einen Belüftungseingang (52).

4. Das Brennstoffzellensystem (100) nach einem der vorangegangenen Ansprüche,
**dadurch gekennzeichnet,**
**dass** die fluidkommunizierende Belüftungsleitung (24) zwischen der Versorgungsleitung (14) und dem mindestens einen Belüftungseingang (52) einen Massenstromsensor (46a) aufweist und/oder dass das Brennstoffzellensystem die Merkmale des Anspruchs 3 aufweist und dass die fluidkommunizierende Verdichterbelüftungsleitung zwischen der Verdichterkühlleitung und dem mindestens einen Belüftungseingang einen Massenstromsensor (46b) aufweist.

5. Das Brennstoffzellensystem (100) nach einem der vorangegangenen Ansprüche,
**dadurch gekennzeichnet,**
**dass** der mindestens eine Belüftungseingang (52) im unteren Drittel, insbesondere an der unteren Stirnseite (53), des Gehäuses (50) und/oder der mindestens eine Ausströmausgang (54) im oberen Drittel, insbesondere an der oberen Stirnseite (55), des Gehäuses (50) angeordnet ist.

6. Das Brennstoffzellensystem (100) nach einem der vorangegangenen Ansprüche,
**dadurch gekennzeichnet, dass**
in der fluidkommunizierenden Belüftungsleitung (24) ein Wärmetauscher (60a) zum Temperieren des Versorgungsfluids und/oder dass das Brennstoffzellensystem die Merkmale des Anspruchs 3 aufweist und in der fluidkommunizierenden Verdichterbelüftungsleitung (34) ein Wärmetauscher (60b) zum Temperieren des Kühlfluids angeordnet ist.

7. Das Brennstoffzellensystem (100) nach einem der vorangegangenen Ansprüche,
**dadurch gekennzeichnet,**
**dass** in der fluidkommunizierenden Belüftungsleitung (24) eine Absperreinheit (62a) zum Unterbrechen der Fluidkommunikation zwischen der ersten Fluidquelle und dem mindestens einen Belüftungseingang (52) und/oder dass das Brennstoffzellensystem die Merkmale des Anspruchs 3 aufweist und in der Verdichterbelüftungsleitung (34) eine Absperreinheit (62b) zum Unterbrechen der Fluidkommunikation zwischen der zweiten Fluidquelle und dem mindestens einen Belüftungseingang (52) ist.

8. Das Brennstoffzellensystem (100) nach Anspruch 6 oder 7,
**dadurch gekennzeichnet,**
**dass** der Wärmetauscher (60a) in der fluidkommunizierenden Belüftungsleitung (24) und/oder die Absperreinheit (62a) in der fluidkommunizierenden Belüftungsleitung (24) und/oder der Wärmetauscher (60b) in der fluidkommunizierenden Verdichterbelüftungsleitung (34) und/oder die Absperreinheit (62b) in der fluidkommunizierenden Verdichterbelüftungsleitung (34) mittels einer Regelung (66) geregelt werden.

9. Das Brennstoffzellensystem (100) nach einem der vorangegangenen Ansprüche,
**dadurch gekennzeichnet,**
**dass** das Brennstoffzellensystem (100) eine fluidkommunizierende Ausströmleitung (56) zwischen dem mindestens einen Ausströmausgang (54) und einem Ausströmelement zum Verbinden des mindestens einen Ausströmausgangs (54) mit dem Ausströmelement umfasst.

10. Ein Verfahren (200) zum Belüften eines Gehäuses eines Brennstoffzellensytems (100) nach einem der Ansprüche 1 bis 9, wobei das Verfahren (200) die Schritte
- Bereitstellen (202) eines Versorgungsfluids
- Verdichten (203) des Versorgungsfluids durch den Verdichter (16)
- Strömen (204) des Versorgungsfluids in der Versorgungsleitung (14)
- Strömen (206) zumindest eines Teils des Versorgungsfluids als Belüftungsfluid in der fluidkommunizierenden Belüftungsleitung (24)
- Einströmen (208) des Belüftungsfluids in den mindestens einen Belüftungseingang (52) des Gehäuses (50)
- Strömen (210) des Belüftungsfluids durch das Gehäuse (50) und gleichzeitiges Mischen (211) des Belüftungsfluides mit Wasserstoff zu einem Ausströmfluid, und
- Ausströmen (212) des Ausströmfluids aus dem mindestens einen Ausströmausgang (54) des Gehäuses (50)
umfasst
und/oder wobei das Brennstoffzellensystem die Merkmale des Anspruchs 3 aufweist und das Verfahren (200) die Schritte
- Bereitstellen (222) eines Kühlfluids
- Verdichten (223) des Kühlfluids
- Strömen (224) des Kühlfluids in der Verdichterkühlleitung (32) zum Kühlen des Verdichters (16)
- Strömen (226) zumindest eines Teils des Kühlfluids als Belüftungsfluid in der fluidkommunizierenden Verdichterbelüftungsleitung (34)
- Einströmen (228) des Belüftungsfluids in den mindestens einen Belüftungseingang (52) des Gehäuses (50)
- Strömen (230) des Belüftungsfluids durch das Gehäuse (50) und gleichzeitiges Mischen (231) des Belüftungsfluides mit Wasserstoff zu einem Ausströmfluid, und
- Ausströmen (232) des Ausströmfluids aus dem mindestens einen Ausströmausgang (54) des Gehäuses (50)
umfasst.

11. Ein Kraftfahrzeug (300) mit einem Brennstoffzellensystem (100) nach einem der Ansprüche 1 bis 9.

## Claims

1. Fuel cell system (100) with
g) at least one fuel cell (90), wherein each fuel cell (90) has a cathode inlet (92),
h) a housing (50), in which the at least one fuel cell (90) is arranged, wherein the housing (50) has at least one ventilation inlet (52) for the inflow of at least one ventilation fluid and at least one outflow outlet (54) for the outflow of at least one outflow fluid,
i) a supply line (14) to the at least one cathode inlet (92) for providing a supply fluid from a first fluid source to the at least one cathode inlet (92), and
j) a compressor (16) in the supply line (14) for compressing the supply fluid,
**characterized in that**
the fuel cell system (100) further comprises:
k) a fluidly communicating ventilation line (24) between the supply line (14) and the at least one ventilation inlet (52) for connecting the supply line (14) to the at least one ventilation inlet (52), wherein the fluidly communicating ventilation line (24) is connected to the supply line (14) between the compressor (16) and the at least one cathode inlet (92), wherein a humidifier (44) is arranged in the supply line (14) between the compressor (16) and the at least one cathode inlet (92), and the fluidly communicating ventilation line (24) is connected to the supply line (14) situated between the humidifier (44) and the at least one fuel cell (90).

2. Fuel cell system (100) according to Claim 1,
**characterized in that**
a heat exchanger (42), in particular a charge-air cooler, is arranged in the supply line (14) between the compressor (16) and the at least one cathode inlet (92), and the fluidly communicating ventilation line (24) is connected to the supply line (14) situated between the heat exchanger (42) and the at least one fuel cell (90).

3. Fuel cell system (100) according to any of the preceding claims, **characterized in that**
the fuel cell system (100) further comprises a compressor cooling line (32) for cooling the compressor (16) and a fluidly communicating compressor ventilation line (34) between the compressor cooling line (32) and the at least one ventilation inlet (52) for connecting the compressor cooling line (32) to the at least one ventilation inlet (52).

4. Fuel cell system (100) according to any of the preceding claims, **characterized in that**
the fluidly communicating ventilation line (24) has a mass-flow sensor (46a) between the supply line (14) and the at least one ventilation inlet (52), and/or in that the fuel cell system has the features of Claim 3 and **in that** the fluidly communicating compressor ventilation line has a mass-flow sensor (46b) between the compressor cooling line and the at least one ventilation inlet.

5. Fuel cell system (100) according to any of the preceding claims, **characterized in that**
the at least one ventilation inlet (52) is arranged in the lower third, in particular on the lower end (53), of the housing (50) and/or the at least one outflow outlet (54) is arranged in the upper third, in particular on the upper end (55), of the housing (50).

6. Fuel cell system (100) according to any of the preceding claims, **characterized in that**
a heat exchanger (60a) for controlling the temperature of the supply fluid is arranged in the fluidly communicating ventilation line (24), and/or **in that** the fuel cell system has the features of Claim 3 and a heat exchanger (60b) for controlling the temperature of the cooling fluid is arranged in the fluidly communicating compressor ventilation line (34).

7. Fuel cell system (100) according to any of the preceding claims, **characterized in that**
there is in the fluidly communicating ventilation line (24) a shut-off unit (62a) for interrupting the fluid communication between the first fluid source and the at least one ventilation inlet (52), and/or **in that** the fuel cell system has the features of Claim 3 and there is in the compressor ventilation line (34) a shut-off unit (62b) for interrupting the fluid communication between the second fluid source and the at least one ventilation inlet (52).

8. Fuel cell system (100) according to Claim 6 or 7,
**characterized in that**
the heat exchanger (60a) in the fluidly communicating ventilation line (24) and/or the shut-off unit (62a) in the fluidly communicating ventilation line (24) and/or the heat exchanger (60b) in the fluidly communicating compressor ventilation line (34) and/or the shut-off unit (62b) in the fluidly communicating compressor ventilation line (34) is/are controlled by means of a controller (66).

9. Fuel cell system (100) according to any of the preceding claims, **characterized in that**
the fuel cell system (100) comprises a fluidly communicating outflow line (56) between the at least one outflow outlet (54) and an outflow element for connecting the at least one outflow outlet (54) to the outflow element.

10. Method (200) for ventilating a housing of a fuel cell system (100) according to any of Claims 1 to 9, wherein the method (200) has the steps of
- providing (202) a supply fluid
- compressing (203) the supply fluid by means of the compressor (16)
- flow (204) of the supply fluid in the supply line (14)
- flow (206) of at least some of the supply fluid as ventilation fluid in the fluidly communicating ventilation line (24)
- inflow (208) of the ventilation fluid into the at least one ventilation inlet (52) of the housing (50)
- flow (210) of the ventilation fluid through the housing (50) and simultaneously mixing (211) the ventilation fluid with hydrogen to give an outflow fluid, and
- outflow (212) of the outflow fluid from the at least one outflow outlet (54) of the housing (50)
and/oder wherein the fuel cell system has the features of Claim 3 and the method (200) comprises the steps of
- providing (222) a cooling fluid
- compressing (223) the cooling fluid
- flow (224) of the cooling fluid in the compressor cooling line (32) to cool the compressor (16)
- flow (226) of at least some of the cooling fluid as ventilation fluid in the fluidly communicating compressor ventilation line (34)
- inflow (228) of the ventilation fluid into the at least one ventilation inlet (52) of the housing (50)
- flow (230) of the ventilation fluid through the housing (50) and simultaneously mixing (231) the ventilation fluid with hydrogen to give an outflow fluid, and
- outflow (232) of the outflow fluid from the at least one outflow outlet (54) of the housing (50).

11. Motor vehicle (300) having a fuel cell system (100) according to any of claims 1 to 9.

## Revendications

1. Système de pile à combustible (100) avec
g) au moins une pile à combustible (90), chaque pile à combustible (90) comportant une entrée de cathode (92),
h) un boîtier (50), dans lequel est disposée l'au moins une pile à combustible (90), le boîtier (50) comportant au moins une entrée de ventilation (52) pour l'afflux d'au moins un fluide de ventilation et au moins une sortie d'écoulement (54) pour l'écoulement d'au moins un fluide d'écoulement,
i) une conduite d'alimentation (14) vers au moins une entrée de cathode (92) pour fournir un fluide d'alimentation d'une première source de fluide vers l'au moins une entrée de cathode (92), et
j) un compresseur (16) dans la conduite d'alimentation (14) pour comprimer le fluide d'alimentation,
**caractérisé en ce que**
le système de pile à combustible (100) comprend par ailleurs :
k) une conduite de ventilation (24) à communication fluidique entre la conduite d'alimentation (14) et l'au moins une entrée de ventilation (52) pour relier la conduite d'alimentation (14) à l'au moins une entrée de ventilation (52), la conduite de ventilation (24) à communication fluidique étant reliée à la conduite d'alimentation (14) entre le compresseur (16) et l'au moins une entrée de cathode (92), un humidificateur (44) étant disposé dans la conduite d'alimentation (14) entre le compresseur (16) et l'au moins une entrée de cathode (92), et la conduite de ventilation (24) à communication fluidique étant reliée à la conduite d'alimentation (14), qui se trouve entre l'humidificateur (44) et l'au moins une pile à combustible (90).

2. Système de pile à combustible (100) selon la revendication 1,
**caractérisé en ce que**
un échangeur de chaleur (42), en particulier un refroidisseur d'air de suralimentation, est disposé dans la conduite d'alimentation (14) entre le compresseur (16) et l'au moins une entrée de cathode (92), et la conduite de ventilation (24) à communication fluidique est reliée à la conduite d'alimentation (14), qui se trouve entre l'échangeur de chaleur (42) et l'au moins une pile à combustible (90).

3. Système de pile à combustible (100) selon l'une des revendications précédentes,
**caractérisé en ce que**
le système de pile à combustible (100) comprend par ailleurs une conduite de refroidissement (32) de compresseur destinée à refroidir le compresseur (16) et une conduite de ventilation de compresseur (34) à communication fluidique entre la conduite de refroidissement (32) de compresseur et l'au moins une entrée de ventilation (52) pour relier la conduite de refroidissement (32) de compresseur à l'au moins une entrée de ventilation (52).

4. Système de pile à combustible (100) selon l'une des revendications précédentes,
**caractérisé en ce que**
la conduite de ventilation (24) à communication fluidique comporte un capteur de débit massique (46a) entre la conduite d'alimentation (14) et l'au moins une entrée de ventilation (52), et/ou que le système de pile à combustible présente les caractéristiques de la revendication 3, et que la conduite de ventilation de compresseur à communication fluidique comporte un capteur de débit massique (46b) entre la conduite de refroidissement de compresseur et l'au moins une entrée de ventilation.

5. Système de pile à combustible (100) selon l'une des revendications précédentes,
**caractérisé en ce que**
l'au moins une entrée de ventilation (52) est disposée dans le tiers inférieur, en particulier sur le côté frontal inférieur (53), du boîtier (50) et/ou l'au moins une sortie d'écoulement (54) est disposée dans le tiers supérieur, en particulier sur le côté frontal supérieur (55) du boîtier (50).

6. Système de pile à combustible (100) selon l'une des revendications précédentes,
**caractérisé en ce que**
un échangeur de chaleur (60a) destiné à thermoréguler le fluide d'alimentation est disposé dans la conduite de ventilation (24) à communication fluidique et/ou que le système de pile à combustible présente les caractéristiques de la revendication 3, et un échangeur de chaleur (60b) destiné à thermoréguler le fluide de refroidissement est disposé dans la conduite de ventilation (34) de compresseur à communication fluidique.

7. Système de pile à combustible (100) selon l'une des revendications précédentes,
**caractérisé en ce que**
une unité d'arrêt (62a) destinée à interrompre la communication fluidique entre la première source de fluide et l'au moins une entrée de ventilation (52) est disposée dans la conduite de ventilation (24) à communication fluidique, et/ou que le système de pile à combustible présente les caractéristiques de la revendication 3, et une unité d'arrêt (62b) destinée à interrompre la communication fluidique entre la deuxième source de fluide et l'au moins une entrée de ventilation (52) est disposée dans la conduite de ventilation (34) de compresseur.

8. Système de pile à combustible (100) selon la revendication 6 ou la revendication 7,
**caractérisé en ce que**
l'échangeur de chaleur (60a) dans la conduite de ventilation (24) à communication fluidique et/ou l'unité d'arrêt (62a) dans la conduite de ventilation (24) communiquant avec le fluide et/ou l'échangeur de chaleur (60b) dans la conduite de ventilation (34) de compresseur à communication fluidique et/ou l'unité d'arrêt (62b) dans la conduite de ventilation (34) de compresseur à communication fluidique sont régulés au moyen d'une régulation (66).

9. Système de pile à combustible (100) selon l'une des revendications précédentes,
**caractérisé en ce que**
le système de pile à combustible (100) comprend une conduite d'écoulement (56) à communication fluidique entre l'au moins une sortie d'écoulement (54) et un élément d'écoulement pour relier l'au moins une sortie d'écoulement (54) à l'élément d'écoulement.

10. Procédé (200) pour ventiler un boîtier d'un système de pile à combustible (100) selon l'une des revendications 1 à 9, le procédé (200) comprenant les étapes de
- fourniture (202) d'un fluide d'alimentation
- compression (203) du fluide d'alimentation par le compresseur (16),
- écoulement (204) du fluide d'alimentation dans la conduite d'alimentation (14)
- écoulement (206) d'au moins une partie du fluide d'alimentation en tant que fluide de ventilation dans la conduite de ventilation (24) à communication fluidique
- afflux (208) du fluide de ventilation dans l'au moins une entrée de ventilation (52) du boîtier (50),
- écoulement (210) du fluide de ventilation à travers le boîtier (50) et mélange (211) simultanément du fluide de ventilation avec de l'hydrogène pour former un fluide d'écoulement, et
- écoulement (212) du fluide d'écoulement hors de l'au moins une sortie d'écoulement (54) du boîtier (50),
et/ou
le système de pile à combustible présentant les caractéristiques de la revendication 3 et le procédé (200) comprenant les étapes
- fourniture (222) d'un fluide de refroidissement
- compression (223) du liquide de refroidissement
- écoulement (224) du fluide de refroidissement dans la conduite de refroidissement (32) de compresseur pour refroidir le compresseur (16),
- écoulement (226) d'au moins une partie du fluide de refroidissement en tant que fluide de ventilation dans la conduite de ventilation (34) de compresseur à communication fluidique
- afflux (228) du fluide de ventilation dans l'au moins une entrée de ventilation (52) du boîtier (50),
- écoulement (230) du fluide de ventilation à travers le boîtier (50) et mélange (231) simultanément du fluide de ventilation avec de l'hydrogène pour former un fluide d'écoulement, et
- écoulement (232) du fluide d'écoulement hors de l'au moins une sortie d'écoulement (54) du boîtier (50).

11. Véhicule à moteur (300) avec un système de pile à combustible (100) selon l'une des revendications 1 à 9.
